(19) Europäisches Patentamt
European Patent Office
Office européen des brevets

(11) **EP 3 133 861 B1**

(12) **EUROPEAN PATENT SPECIFICATION**

(45) Date of publication and mention
of the grant of the patent:
**18.09.2019 Bulletin 2019/38**

(51) Int Cl.:
*H04W 28/06* (2009.01)    *H04L 1/16* (2006.01)
*H04W 80/02* (2009.01)

(21) Application number: **16193496.3**

(22) Date of filing: **30.07.2014**

(54) **METHODS, APPARATUSES AND COMPUTER READABLE MEDIA FOR ACKNOWLEDGING MULTI-DESTINATION TRAFFIC IN A WIRELESS NETWORK**

VERFAHREN, VORRICHTUNGEN UND COMPUTERLESBARE MEDIEN ZUR BESTÄTIGUNG EINES VERKEHRS MIT MEHREREN ZIELEN IN EINEM DRAHTLOSNETZWERK

PROCÉDÉS, APPAREILS ET SUPPORTS LISIBLES PAR ORDINATEUR POUR ACCUSER DU TRAFIC MULTI-DESTINATION DANS UN RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2013 US 201361860227 P**
**29.07.2014 US 201414446325**

(43) Date of publication of application:
**22.02.2017 Bulletin 2017/08**

(62) Document number(s) of the earlier application(s) in accordance with Art. 76 EPC:
**14753372.3 / 3 028 497**

(73) Proprietor: **QUALCOMM Incorporated**
**San Diego, CA 92121-1714 (US)**

(72) Inventors:
• **ASTERJADHI, Alfred**
**San Diego, CA 92121-1714 (US)**
• **MERLIN, Simone**
**San Diego, CA 92121-1714 (US)**

(74) Representative: **Wimmer, Hubert et al**
**Wagner & Geyer Partnerschaft mbB**
**Patent- und Rechtsanwälte**
**Gewürzmühlstrasse 5**
**80538 München (DE)**

(56) References cited:
**WO-A1-2010/099496    WO-A1-2012/030541**
**US-A1- 2013 089 047**

**EP 3 133 861 B1**

**Description**

## BACKGROUND

**Field**

The present application relates generally to wireless communications, and more specifically to systems, methods, and devices for communicating multi-destination traffic.

**Background**

In many telecommunication systems, communications networks are used to exchange messages among several interacting spatially-separated devices. Networks may be classified according to geographic scope, which could be, for example, a metropolitan area, a local area, or a personal area. Such networks would be designated respectively as a wide area network (WAN), metropolitan area network (MAN), local area network (LAN), wireless local area network (WLAN), or personal area network (PAN). Networks also differ according to the switching/routing technique used to interconnect the various network nodes and devices (e.g., circuit switching vs. packet switching), the type of physical media employed for transmission (e.g., wired vs. wireless), and the set of communication protocols used (e.g., Internet protocol suite, SONET (Synchronous Optical Networking), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infrared, optical, etc. frequency bands. Wireless networks advantageously facilitate user mobility and rapid field deployment when compared to fixed wired networks.

However, multiple wireless networks may exist in the same building, in nearby buildings, and/or in the same outdoor area. The prevalence of multiple wireless networks may cause interference, reduced throughput (e.g., because each wireless network is operating in the same area and/or spectrum), and/or prevent certain devices from communicating. Thus, improved systems, methods, and devices for communicating when wireless networks are densely populated are desired.

Attention is drawn to document WO 2010/099496 A1 which relates to techniques for aggregating certain frame types in uplink and/or downlink transmit opportunities. Further attention is drawn to document WO 2012/030541 A1 which relates to techniques and apparatus for transmitting, receiving, and acknowledging MAC protocol data units (MPDUs), allowing single bits in a Block Acknowledgment (BA) bitmap to acknowledge receipt of multiple MPDUs.

Furthermore attention is drawn to document US 2013/089047 A1 which relates to methods and apparatus for multiuser transmission during a grant to utilize unused portion of a transmit opportunity (TXOP) that is assigned to an initiator device. A responder device may receive, from an initiator device, at least one grant to utilize unused portion of the TXOP. In response to the grant and during the unused portion of the TXOP, The responder device may transmit a first message intended for the initiator device, and one or more messages intended for one or more other stations using multiuser transmission schemes. The messages transmitted to stations other than the initiator device may include an indication that the station does not need to respond (e.g., with an acknowledgment) upon receipt of the message.

## SUMMARY

In accordance with the present invention, a method of wireless communication, as set forth in claim 1, an apparatus, as set forth in claim 8, a method of wireless communication, as set forth in claim 9, and an apparatus, set forth in claim 14, is provided. Additionally, a computer readable medium is provided in claim 15. Further embodiments are claimed in the dependent claims. The systems, methods, and devices of the invention each have several aspects, no single one of which is solely responsible for its desirable attributes. The embodiments that do not fall under the scope of the claims have to be interpreted as examples useful for understanding the invention. After considering this discussion, and particularly after reading the section entitled "Detailed Description" one will understand how the features of this invention provide advantages that include improved communications between access points and stations in a wireless network.

One aspect of this disclosure provides a method of wireless communication. In one aspect, the method includes: generating, by a wireless device, an aggregated media access control protocol data unit (A-MPDU) frame comprising two or more A-MPDU sub-frames, wherein each A-MPDU sub-frame comprises a receiver address and further wherein the A-MPDU frame comprises at least one indication for one or more acknowledgement policies associated with the receiver address of each A-MPDU sub-frame; and outputting for transmission, by the wireless device, the A-MPDU frame.

In some aspects, the one or more acknowledgement policies are indicated in corresponding one or more control fields of the A-MPDU sub-frames. In some aspects, at least one of the one or more acknowledgement policies indicates that a control response frame should be transmitted after reception of the A-MPDU. In some aspects, the one or more acknowledgement policies indicate that the acknowledgement should be transmitted SIFS time after reception of the A-MPDU.

In some aspects, the at least one of the one or more acknowledgement policies indicates that a control response frame should be transmitted when the at least one of the one or more acknowledgement policies is set to a particular value, such as "normal acknowledgement or implicit block acknowledgement request" value.

In some aspects of the method, at least one of the two or more A-MPDU subframes comprises an A-MPDU delimiter field, and the A-MPDU delimiter field indicates a time delay for an acknowledgement of the corresponding A-MPDU sub-frame. In some aspects, the time delay is based on a back-off value also included in the A-MPDU delimiter field. In some aspects, the back-off value is based on at least one of a SIFS time or a constant value.

In some aspects, the method also includes generating a request for an acknowledgement of receipt in a field in at least one of the two or more A-MPDU subframes, wherein the field comprises a value based on at least one of a value of an end of frame field or a value of an acknowledgement policy field and wherein the value in the field determines a type of the request for an acknowledgement of receipt. In some of these aspects, the acknowledgement of receipt is received after a delay greater than or equal to SIFS time after transmission of the A-MPDU.

In some aspects, the method also includes setting the value of the end of frame (EOF) field in at least one of the two or more A-MPDU sub-frames in the A-MPDU frame to indicate that the type of request for acknowledgement of receipt for the at least one of the two or more A-MPDU sub-frames is an acknowledgement frame. In some aspects, the method also includes setting the value of the end of frame (EOF) field in at least one of the two or more A-MPDU sub-frames in the A-MPDU frame to indicate that the type of request for acknowledgement of receipt for the at least one of the two or more A-MPDU sub-frames is a block acknowledgement frame.

Another aspect disclosed is an apparatus for wireless communication. The apparatus includes a processing system configured to generate an aggregated media access control protocol data unit (A-MPDU) frame comprising two or more media access control protocol data unit (MPDU) sub-frames, wherein each A-MPDU sub-frame comprises a receiver address and further wherein the A-MPDU frame comprises at least one indication for one or more acknowledgement policies associated with the receiver address of each A-MPDU sub-frame; and an interface for outputting the A-MPDU frame for transmission.

In some aspects, the processing system is configured to indicate the one or more acknowledgement policies in corresponding one or more control fields of the A-MPDU sub-frames. In some aspects, one of the one or more acknowledgement policies indicates that a control response frame should be transmitted after reception of the A-MPDU frame. In some aspects, the acknowledgement policy indicates the acknowledgement should be transmitted SIFS time after reception of the A-MPDU frame.

In some aspects, the processing system is configured to set the at least one of the one or more acknowledgement policies to a particular value, such as "normal acknowledgement or implicit block acknowledgement request" value. In some aspects, at least one of the two or more A-MPDU sub-frames comprises an A-MPDU delimiter field, and wherein the processing system is configured to set the A-MPDU delimiter field to indicate a time delay for an acknowledgement of the corresponding A-MPDU sub-frame.

In some aspects, the time delay is based on a back-off value also included in the A-MPDU delimiter field. In some aspects, the back-off value is based on at least one of a SIFS time or a constant value. In some aspects, the processing system is further configured to generate a request for an acknowledgement of receipt tin a field in at least one of the two or more A-MPDU sub-frames, wherein the field comprises a value based on at least one of a value of an end of frame field or a value of an acknowledgement policy field and further wherein the value in the field determines a type of the request for an acknowledgement of receipt. In some aspects, the processing system is further configured to decode the acknowledgement of receipt of the at least one of the two or more A-MPDU sub-frames received after a delay greater than or equal to SIFS time after transmission of the A-MPDU. In some aspects, the processing system is further configured to set the value of the end of frame field in the at least one of the two or more A-MPDU sub-frames to indicate the type of request for acknowledgement of receipt for the at least one of the two or more A-MPDU sub-frames is an acknowledgement frame and decode a received acknowledgement frame for the at least one of the two or more A-MPDU sub-frames In some aspects, the processing system is further configured to set the value of the end of frame field in the at least one of the two or more A-MPDU sub-frames to indicate the type of request for acknowledgement of receipt for the at least one of the two or more A-MPDU sub-frames is a block acknowledgement frame and decode a received block acknowledgement frame for the at least one of the two or more A-MPDU sub-frames.

Another aspect disclosed is an access point. The access point includes at least one antenna, a processing system configured to generate an aggregated media access control protocol data unit (A-MPDU) frame comprising two or more media access control protocol data unit (MPDU) sub-frames, wherein each A-MPDU sub-frame comprises a receiver address and further wherein the A-MPDU frame comprises at least one indication for one or more acknowledgement policies associated with the receiver address of each A-MPDU sub-frame, and a transmitter configured to transmit the A-MPDU frame using the at least one antenna.

Another aspect disclosed is an apparatus. The apparatus includes means for generating an aggregated media access control protocol data unit (A-MPDU) frame comprising two media access control protocol data unit (MPDU) sub-frames, wherein each A-MPDU sub-frame comprises a receiver address and further wherein the A-MPDU frame comprises at least one indication for one or more acknowledgement policies associated with the receiver address of each A-MPDU sub-frame; and means for transmitting the A-MPDU frame.

In some aspects, the means for generating two or more media access control protocol data unit (MPDU) sub-frames is a processing system. In some aspects, the means for generating an aggregated media access control protocol data unit (A-MPDU) frame comprising the two or more A-MPDU sub-frames is a processing system. In some aspects, the means for transmitting the A-MPDU frame is a transmitter.

In some aspects, the means for generating two or more MPDU sub-frames is configured to indicate the one or more acknowledgement policies in corresponding one or more control fields of the A-MPDU sub-frames. In some aspects, one of the one or more acknowledgement policies indicates a control response frame should be transmitted after reception of the A-MPDU. In some aspects, the acknowledgement policy indicates the acknowledgement should be transmitted SIFS time after reception of the A-MPDU. In some aspects, the means for generating two or more MPDU sub-frames is configured to set at least one of the one or more acknowledgement policies to a particular value, such as "normal acknowledgement or implicit block acknowledgement request" value. In some aspects, at least one of the two or more A-MPDU sub-frames comprises an A-MPDU delimiter field, and wherein the means for generating two or more MPDU subframes is configured to set the A-MPDU delimiter field to indicate a time delay for an acknowledgement of the corresponding A-MPDU sub-frame. In some aspects, the time delay is based on a back-off value included in the A-MPDU delimiter field. In some aspects, the back-off value is based on at least one of SIFS time or a constant value. In some aspects, the apparatus also includes means for generating the A-MPDU frame comprising the two or more A-MPDU sub-frames comprises generating a request for an acknowledgement of receipt in a field in at least one of the two or more A-MPDU subframes, wherein the field comprises a value based on at least one of a value of an end of frame field or a value of an acknowledgement policy field and further wherein the value in the field determines a type of the request for an acknowledgement of receipt.

In some aspects, the apparatus further includes the means for decoding the acknowledgement of receipt of the at least one of the two or more A-MPDU sub-frames received after a delay greater than or equal to a short interframe space time after transmission of the A-MPDU frame. In some aspects, the apparatus also includes means for decoding a block acknowledgement frame for one of the A-MPDU subframes when an end of frame (EOF) field of the A-MPDU sub-frame is zero. In some aspects, the apparatus also includes means for decoding an acknowledgement frame for the one A-MPDU sub-frame when an end of frame (EOF) field of the one A-MPDU sub-frame is set.

Another aspect disclosed is a computer program product comprising a computer readable medium encoded thereon with instructions that when executed cause an apparatus to perform a method of wireless communication, said method comprising:

generating an aggregated media access control protocol data unit (A-MPDU) frame comprising two or more A-MPDU sub-frames, wherein each A-MPDU sub-frame comprises a receiver address and further wherein the A-MPDU comprises at least one indication for one or more acknowledgement policies associated with the receiver address of each A-MPDU sub-frame, and transmitting the A-MPDU frame.

Another aspect disclosed is a method of wireless communication. The method includes receiving, by a wireless device, an aggregated media access control protocol data unit (A-MPDU) frame, decoding, by the wireless device, two or more A-MPDU sub-frames of the received A-MPDU frame; decoding, by the apparatus, a receiver address corresponding to each of the two or more A-MPDU sub-frame, and determining that at least one of the two or more A-MPDU sub-frames of the received A-MPDU frame is addressed to the apparatus based on the decoded receiver address for each of the two or more A-MPDU sub-frames .

In some aspects, the method also includes decoding one or more acknowledgement policies corresponding to each of the two or more A-MPDU sub-frames of the received A-MPDU frame based on at least one indication associated with the receiver address of each A-MPDU sub-frame in corresponding at least one fields of each of the two or more A-MPDU sub-frames. In some aspects, the method also includes, if the field of each of the two or more A-MPDU sub-frames is set to a particular value, generating a frame based on the particular value of the field and outputting the frame for transmission. In some aspects, the method also includes decoding a value in an end of frame field in the at least one of the two or more A-MPDU sub-frames, wherein the frame generated and output for transmission is an acknowledgement frame if the value in the end of frame field is one. In some aspects, the method also includes decoding a value in an end of frame field in the at least one of the two or more A-MPDU sub-frames, wherein the frame generated and output for transmission is a block acknowledgement frame if the value in the end of frame field is zero. In some aspects, the method also includes decoding a value in an end of frame field in the at least one of the two or more A-MPDU sub-frames, the value indicating a type of request for acknowledgement of receipt for the one or more acknowledgement policies corresponding to each of the two or more A-MDPU sub-frames, generating an acknowledgement frame acknowledging receipt of the at least one of the two or more A-MPDU sub-frames if the decoded value in the end of frame field is one, and outputting for transmission the acknowledgement frame.

In some aspects, the method also includes decoding a value in an end of frame field in the at least one of the two or more A-MPDU sub-frames, the value indicating a type of request for acknowledgement of receipt for the one or more acknowledgement policies corresponding to each of the two or more A-MDPU sub-frames, generating a block acknowledgement frame acknowledging receipt of the at least one of the two or more A-MPDU sub-frames if the decoded value in the end of frame field is zero, and outputting for transmission the block acknowledgement frame. In some aspects, the method further includes decoding a media access control protocol data unit (MPDU) delimiter field in the at least one of the two or more A-MPDU sub-frames, determining a time delay, from a value stored in the delimiter field, that is to elapse after reception of the A-MPDU frame and before outputting for transmission the acknowledgement frame, and outputting for transmission the acknowledgement frame after the time delay elapses based on the decoded acknowledgement policies corresponding to each of the two or more A-MPDU sub-frames. In some aspects, the method further includes where the value stored in the MPDU delimiter field is a back-off value or where the back-off value stored in the MPDU delimiter field is based on at least one of a short inter-frame space time or a constant value. In some aspects, the method includes comprising generating an acknowledgement of receipt of at least one of the two or more A-MPDU sub-frames and outputting for transmission the acknowledgement of receipt after a delay greater than or equal to a short inter-time frame space time after transmission of the A-MPDU frame based on the decoded one or more acknowledgement policies corresponding to each of the two or more A-MDPU sub-frames. In some aspects, the method further comprises setting, by the apparatus, a transmitter address field of each of the two or more A-MPDU sub-frames to indicate a source transmitter address of each of the two or more A-MPDU sub-frames

Another aspect disclosed is an apparatus for wireless communication. The apparatus includes a receiver configured to receive an aggregated media access control protocol data unit (MPDU) frame; and a processing system configured to decode two or more A-MPDU sub-frames of the received A-MPDU frame and to decode receiver addresses corresponding to each the two or more A-MPDU sub-frames and determine that at least one of the two or more A-MPDU sub-frames of the received A-MPDU frame is addressed to the apparatus based on the decoded receiver address for each of the two or more A-MPDU sub-frames. In some aspects of the apparatus, the processing system is further configured to decode an acknowledgement policy an acknowledgement policy for each of the two or more A-MPDU sub-frames of the received A-MPDU frame that is addressed to the apparatus based on at least one indication associated with the receiver address of each A-MPDU sub-frame in corresponding at least one field of each of the two or more A-MPDU sub-frames.

Some aspects of the apparatus also include the processing system further configured to, if the at least one field of each of the two or more A-MPDU sub-frames is set to a particular value, generate a frame and outputting the frame for transmission.

In some aspects, the processing system is further configured to decode a value in an end of frame field in the at least one of the two or more A-MPDU sub-frames of the received A-MPDU frame that is addressed to the apparatus, wherein the process system is further configured to generate the frame based on the particular value of the field for transmission as an acknowledgement frame if the value in the end of frame field is one. In some aspects, the processing system is further configured to decode a value in an end of frame field in the at least one of the two or more A-MPDU sub-frames of the received A-MPDU frame that is addressed to the apparatus, wherein the processing system is further configured to generate the frame for transmission as a block acknowledgement frame if the value in the end of frame field is zero. In some aspects, the processing system is further configured to decode a value in an end of frame field of the at least one field in the at least one of the two or more A-MPDU sub-frames, the value indicating a type of request for acknowledgement of receipt for the acknowledgement policy of each of the two or more A-MPDU sub-frames and further configured to generate an acknowledgement frame for transmission if the decoded value in the end of frame field is one. In some aspects, the processing system is further configured to decode a value in an end of frame field of the at least one field in the at least one of the two or more A-MPDU sub-frames, the value indicating a type of request for acknowledgement of receipt for the acknowledgement policy of each of the two or more A-MPDU sub-frames and further configured to generate a block acknowledgement frame for transmission if the decoded value in the end of frame field is zero. In some aspects, the processing system is further configured to decode a media access control protocol data unit (MPDU) delimiter field in the at least one of the two or more A-MPDU sub-frames, determine a time delay, from a value stored in the delimiter field, that is to elapse after reception of the A-MPDU frame and before transmission of the acknowledgement frame, and generate for transmission the acknowledgement frame after the time delay elapses based on the decoded acknowledgement policy of each of the two or more A-MPDU sub-frames. In some aspects, the value stored in the MPDU delimiter field is a back-off value. In some aspects, the back-off value stored in the MPDU delimiter field is based on at least one of a short inter-frame space time or a constant value. In some aspects, the processing system is further configured to generate for transmission an acknowledgement of receipt of at least one of the two or more A-MPDU sub-frames of the received A-MPDU frame that is addressed to the apparatus after a delay greater than or equal to a short inter-frame space time after transmission of the A-MPDU frame based on the decoded one or more acknowledgement policies corresponding to each of the two or more A-MPDU sub-frames. In some aspects, the processing system is further configured to set a transmitter address field of each of the two or more A-MPDU sub-frames to indicate a source transmitter address of each of the two or more A-MPDU sub-frames.

Another aspect disclosed is a station for wireless communication. The station includes at least one antenna, a receiver configured to receive an aggregated media access control protocol data unit (A-MPDU) frame via the antenna; and a processing system configured to decode two or more A-MPDU sub-frames of the received A-MPDU frame, decode a receiver address corresponding to each of the two or more A-MPDU sub-frames, and determine that at least one of the two or more A-MPDU sub-frames of the received A-MPDU frame is addressed to the apparatus based on the decoded receiver address for each of the two or more A-MPDU sub-frames.

Another aspect disclosed is an apparatus for wireless communication. The apparatus includes means for receiving an aggregated media access control protocol data unit (MPDU) frame, means for decoding two or more A-MPDU sub-frames of the received A-MPDU frame, and means for decoding a receiver address corresponding to each of the two or more A-MPDU sub-frames. In some aspects, the apparatus also includes means for determining one of the two A-MPDU sub-frames is addressed to the apparatus based on the decoded receiver address for each of the two or more A-MPDU sub-frames.

Some aspects of the apparatus include means for decoding an acknowledgement policy for each of the two or more A-MPDU sub-frames based on at least one indication associated with the receiver address of each A-MPDU sub-frame in corresponding at least one field of each of the two or more A-MPDU sub-frames.

Some aspects of the apparatus also include, if the at least one field of each of the two or more A-MPDU sub-frames is set to a particular value, means for generating a frame based on the particular value of the at least one field and means for transmitting the frame. In some aspects, the means for decoding is further configured to decode a value in an end of frame field of the at least one field in the at least one of the two or more A-MPDU sub-frames, wherein the means for transmitting is further configured to transmit an acknowledgement frame as the frame if the value in the end of frame field is one. In some aspects, the means for decoding is further configured to decode a value set in an end of frame field of the at least one field in the at least one of the two or more A-MPDU sub-frames, wherein the means for transmitting is further configured to transmit a block acknowledgement frame as the frame if the value in the end of frame field is zero

Some aspects of the apparatus further include means for decoding a value in an end of frame field in the at least one of the two or more A-MPDU sub-frames, the value indicating a type of request for acknowledgement of receipt for the acknowledgement policy of each of the two or more A-MPDU sub-frames, means for generating an acknowledgement frame for the at least one of the two or more A-MPDU sub-frames if the value in the end of frame field is one, and means for transmitting the acknowledgement frame. In some aspects, the apparatus also includes means for decoding a value in an end of frame field in the at least one of the two or more A-MPDU sub-frames, the value indicating a type of request for acknowledgement of receipt for the acknowledgement policy of each of the two or more A-MPDU subframes, means for generating a block acknowledgement frame for the at least one of the two or more A-MPDU sub-frames if the value in the end of frame field is zero, and means for transmitting the block acknowledgement frame. In some aspects, the apparatus also includes means for decoding a media access control protocol unit (MPDU) delimiter field in the at least one of the two or more A-MPDU sub-frames, means for determining a time delay, from a value stored in the delimiter field, that is to elapse after reception of the A-MPDU frame and before transmission of the acknowledgment frame, and means for transmitting the acknowledgement frame after the time delay elapses based on the decoded acknowledgement policy of each of the two or more A-MPDU sub-frames. In some aspects, the value in the MPDU delimiter field is a back-off value. In some aspects, the back-off value stored in the MPDU delimiter field based on at least one of a short inter-frame space time or a constant value.

In some aspects, the apparatus also includes means for generating an acknowledgement of receipt of at least one of the two or more A-MPDU sub-frames and means for transmitting the acknowledgement of receipt after a delay greater than or equal to a short inter-frame space time after transmission of the A-MPDU frame if the acknowledgement policy for the at least one of the two or more A-MPDU sub-frames indicates a block acknowledgement policy.

In some aspects, the means for receiving is a receiver. In some aspects, the means for decoding two A-MPDU sub-frames is a processing system. In some aspects, the means for decoding two different receiver addresses is a processing system. In some aspects, the means for determining is a processing system. In some aspects, the means for decoding an acknowledgment policy of the one A-MPDU sub-frame is a processing system. In some aspects, the means for transmitting a control frame if the acknowledgment policy is set to a particular value is a transmitter. In some aspects, the means for decoding an end of frame field in the A-MPDU sub-frame is a processing system. In some aspects, the means for determining a time delay for transmitting the control frame is a processing system. In some aspects, the means for receiving a request for an acknowledgment for the A-MPDU sub-frame is a receiver.

In some aspects, the apparatus further includes means for setting a transmitter address field of each of the two or more A-MPDU sub-frames to indicate a source transmitter address of each of the two or more A-MPDU sub-frames.

Another aspect disclosed is a computer program product comprising a computer readable medium encoded thereon with instructions that when executed cause an apparatus to perform a method of wireless communication, said method including receiving an aggregated media access control protocol data unit (MPDU) frame, decoding two or more A-MPDU sub-frames of the received A-MPDU frame; and decoding receiver addresses corresponding to each of the two or more A-MPDU subframes.

## BRIEF DESCRIPTION OF THE DRAWINGS

FIG. 1 shows an exemplary wireless communication system in which aspects of the present disclosure may be employed.

FIG. 2A shows a wireless communication system in which multiple wireless communication networks are present.

FIG. 2B shows another wireless communication system in which multiple wireless communication networks are present.

FIG. 3 shows frequency multiplexing techniques that may be employed within the wireless communication systems of FIGS. 1, 2A, and 2B.

FIG. 4 shows a functional block diagram of an exemplary wireless device that may be employed within the wireless communication systems of FIGS. 1, 2A, 2B, and 3.

FIG. 5A illustrates a plurality of messages transmitted by an access point to three stations in the wireless communication system of FIG. 1, 2A, 2B, and 3.

FIG. 5B illustrates a single A-MPDU transmitted by an access point to three stations in the wireless communication system of FIGS. 1, 2A, 2B, and 3.

FIG. 6 shows an exemplary structure of a media access control protocol data unit (MPDU) sub-frame.

FIG. 7 shows an exemplary structure of a quality of service (QoS) control (qc) field.

FIG. 8 shows an exemplary structure of an aggregated MPDU (A-MPDU) frame.

FIG. 9A shows an embodiment of an MPDU delimiter field.

FIG. 9B shows an alternate embodiment of an MPDU delimiter field.

FIG. 9C shows an A-MPDU frame that includes three A-MPDU sub-frames.

FIG. 9D illustrates an exemplary wireless communication between an access point and three stations.

FIG. 9E illustrates an embodiment of an A-MPDU frame that includes three A-MPDU sub-frames.

FIG. 9F illustrates an exemplary wireless communication between an access point and three stations.

FIG. 10A illustrates an embodiment of an A-MPDU.

FIG. 10B shows an exemplary wireless communication between an access point and three stations.

FIG. 10C illustrates an embodiment of an A-MPDU.

FIG. 10D shows an exemplary wireless communication between an access point and three stations.

FIG. 11A is a flowchart of one exemplary method of wireless communication.

FIG. 11B is a functional block diagram of an exemplary wireless device that may be employed within a wireless communication system.

FIG. 12A is a flowchart of one exemplary method of wireless communication.

FIG. 12B is a functional block diagram of an exemplary wireless device that may be employed within a wireless communication system.

FIG. 13A is a flowchart of one exemplary method of wireless communication.

FIG. 13B is a functional block diagram of an exemplary wireless device that may be employed within a wireless communication system.

## DETAILED DESCRIPTION

Various aspects of the novel systems, apparatuses, and methods are described more fully hereinafter with reference to the accompanying drawings. The teachings disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of or combined with any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

Popular wireless network technologies may include various types of wireless local area networks (WLANs). A WLAN may be used to interconnect nearby devices together, employing widely used networking protocols. The various aspects described herein may apply to any communication standard, such as a wireless protocol.

In some aspects, wireless signals may be transmitted according to a high-efficiency 802.11 protocol using orthogonal frequency-division multiplexing (OFDM), direct-sequence spread spectrum (DSSS) communications, a combination of OFDM and DSSS communications, or other schemes. Implementations of the high-efficiency 802.11 protocol may be used for Internet access, sensors, metering, smart grid networks, or other wireless applications. Advantageously, aspects of certain devices implementing the high-efficiency 802.11 protocol using the techniques disclosed herein may include allowing for increased peer-to-peer services (e.g., Miracast, Wi-Fi Direct Services, Social Wi-Fi, etc.) in the same area, supporting increased per-user minimum throughput requirements, supporting more users, providing improved outdoor coverage and robustness, and/or consuming less power than devices implementing other wireless protocols.

In some implementations, a WLAN includes various devices which are the components that access the wireless network. For example, there may be two types of devices: access points ("APs") and clients (also referred to as stations, or "STAs"). In general, an AP may serve as a hub or base station for the WLAN and an STA serves as a user of the WLAN. For example, an STA may be a laptop computer, a personal digital assistant (PDA), a mobile phone, etc. In an example, an STA connects to an AP via a Wi-Fi (e.g., IEEE 802.11 protocol) compliant wireless link to obtain general connectivity to the Internet or to other wide area networks. In some implementations an STA may also be used as an AP.

Another aspect disclosed is a wireless node for wireless communication, The wireless node includes an antenna, a processing system configured to generate a message indicating a start time of a window during which one or more devices are permitted to communicate with the apparatus, the start time being based on an absolute time reference; and a transmitter configured to transmit the generated message using the antenna.

An access point ("AP") may also comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology.

A station "STA" may also comprise, be implemented as, or known as an access terminal ("AT"), a subscriber station, a subscriber unit, a mobile station, a remote station, a remote terminal, a user terminal, a user agent, a user device, user equipment, or some other terminology. In some implementations an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

As discussed above, certain of the devices described herein may implement a high-efficiency 802.11 standard, for example. Such devices, whether used as an STA or AP or other device, may be used for smart metering or in a smart grid network. Such devices may provide sensor applications or be used in home automation. The devices may instead or in addition be used in a healthcare context, for example for personal healthcare. They may also be used for surveillance, to enable extended-range Internet connectivity (e.g. for use with hotspots), or to implement machine-to-machine communications. Although various systems, methods, and apparatuses are described herein with respect to a high-efficiency 802.11 standard, for example, a person having ordinary skill in the art will appreciate that the present disclosure is applicable to other wireless communication standards such as, for example, 802.11ah.

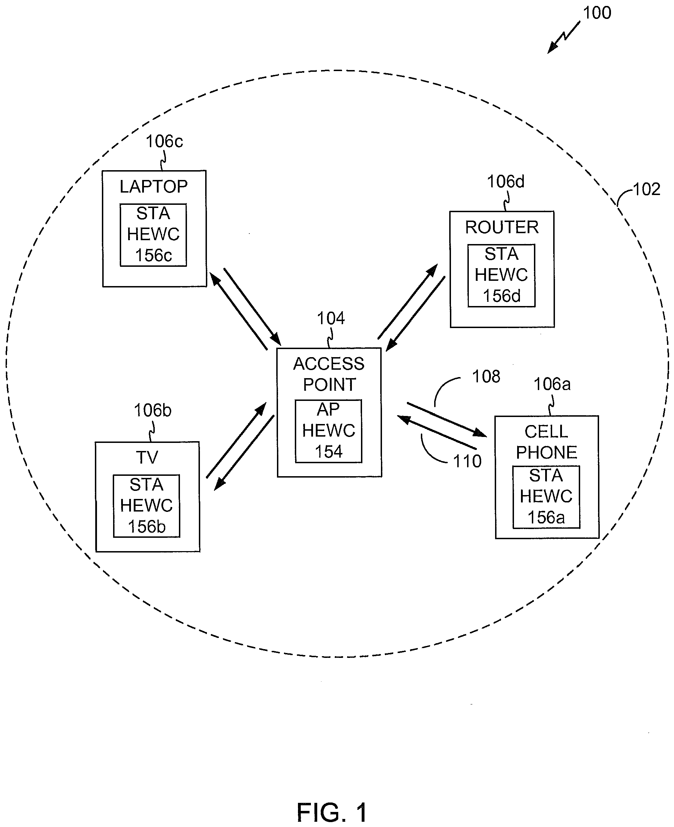

FIG. 1 shows an exemplary wireless communication system 100 in which aspects of the present disclosure may be employed. The wireless communication system 100 may operate pursuant to a wireless standard, for example a high-efficiency 802.11 standard. The wireless communication system 100 may include an AP 104, which communicates with STAs 106 (referring generally to the STAs 106A-106D).

A variety of processes and methods may be used for transmissions in the wireless communication system 100 between the AP 104 and the STAs 106. For example, signals may be sent and received between the AP 104 and the STAs 106 in accordance with OFDM/OFDMA techniques. If this is the case, the wireless communication system 100 may be referred to as an OFDM/OFDMA system. Alternatively, signals may be sent and received between the AP 104 and the STAs 106 in accordance with code division multiple access (CDMA) techniques. If this is the case, the wireless communication system 100 may be referred to as a CDMA system.

A communication link that facilitates transmission from the AP 104 to one or more of the STAs 106 may be referred to as a downlink (DL) 108, and a communication link that facilitates transmission from one or more of the STAs 106 to the AP 104 may be referred to as an uplink (UL) 110. Alternatively, a downlink 108 may be referred to as a forward link or a forward channel, and an uplink 110 may be referred to as a reverse link or a reverse channel.

The AP 104 may act as a base station and provide wireless communication coverage in a basic service area (BSA) 102. The AP 104 along with the STAs 106 associated with the AP 104 and that use the AP 104 for communication may be referred to as a basic service set (BSS). It should be noted that the wireless communication system 100 may not have a central AP 104, but rather may function as a peer-to-peer network between the STAs 106. Accordingly, the functions of the AP 104 described herein may alternatively be performed by one or more of the STAs 106.

In some aspects, a STA 106 may be required to associate with the AP 104 in order to send communications to and/or receive communications from the AP 104. In one aspect, information for associating is included in a broadcast by the AP 104. To receive such a broadcast, the STA 106 may, for example, perform a broad coverage search over a coverage region. A search may also be performed by the STA 106 by sweeping a coverage region in a lighthouse fashion, for example. After receiving the information for associating, the STA 106 may transmit a reference signal, such as an association probe or request, to the AP 104. In some aspects, the AP 104 may use backhaul services, for example, to communicate with a larger network, such as the Internet or a public switched telephone network (PSTN).

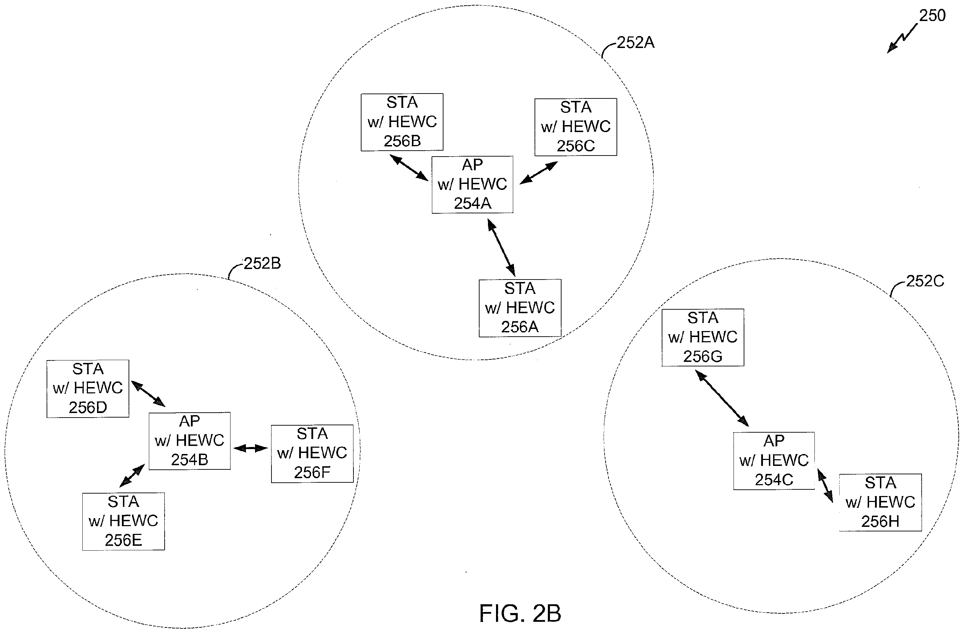

In an embodiment, the AP 104 includes an AP high-efficiency wireless component (HEWC) 154. The AP HEWC 154 may perform some or all of the operations described herein to enable communications between the AP 104 and the STAs 106 using the high-efficiency 802.11 protocol. The functionality of the AP HEWC 154 is described in greater detail below with respect to FIGS. 2B, 3, 4, and 5-11.

Alternatively or in addition, the STAs 106 may include a STA HEWC 156. The STA HEWC 156 may perform some or all of the operations described herein to enable communications between the STAs 106 and the AP 104 using the high-frequency 802.11 protocol. The functionality of the STA HEWC 156 is described in greater detail below with respect to FIGS. 2B, 3, 4, and 5-11.

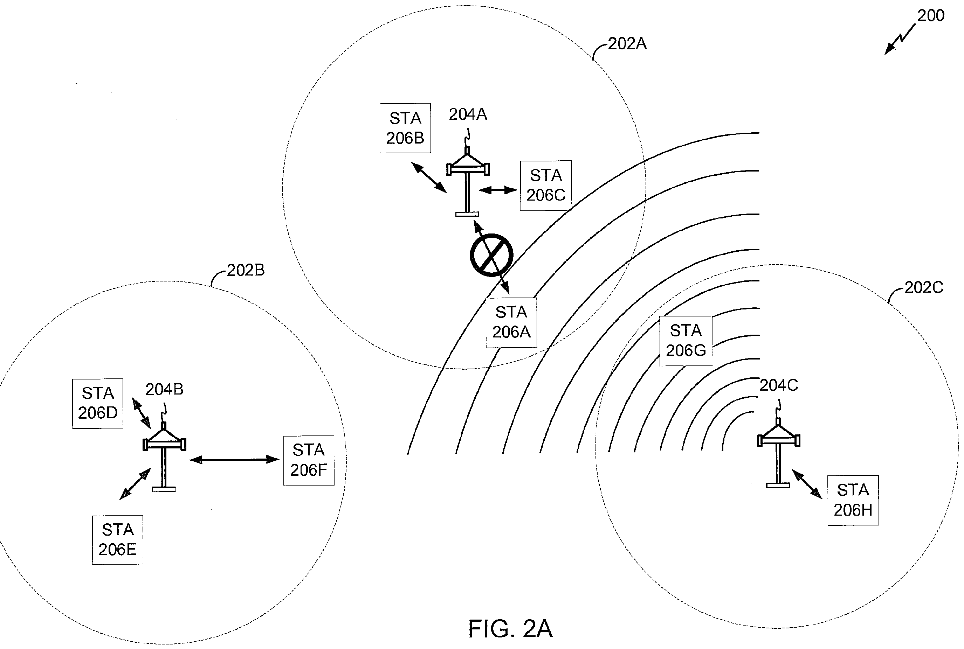

In some circumstances, a BSA may be located near other BSAs. For example, FIG. 2A shows a wireless communication system 200 in which multiple wireless communication networks are present. As illustrated in FIG. 2A, BSAs 202A, 202B, and 202C may be physically located near each other. Despite the close proximity of the BSAs 202A-202C, the APs 204A-204C and/or STAs 206A-206H may each communicate using the same spectrum. Thus, if a device in the BSA 202C (e.g., the AP 204C) is transmitting data, devices outside the BSA 202C (e.g., APs 204A-204B or STAs 206A-206F) may sense the communication on the medium.

Generally, wireless networks that use a regular 802.11 protocol (e.g., 802.1 1a, 802.11b, 802.11g, 802.11n, etc.) operate under a carrier sense multiple access (CSMA) mechanism for medium access. According to CSMA, devices sense the medium and only transmit when the medium is sensed to be idle. Thus, if the APs 204A-204C and/or STAs 206A-206H are operating according to the CSMA mechanism and a device in the BSA 202C (e.g., the AP 204C) is transmitting data, then the APs 204A-204B and/or STAs 206A-206F outside of the BSA 202C may not transmit over the medium even though they are part of a different BSA.

FIG. 2A illustrates such a situation. As illustrated in FIG. 2A, AP 204C is transmitting over the medium. The transmission is sensed by STA 206G, which is in the same BSA 202C as the AP 204C, and by STA 206A, which is in a different BSA than the AP 204C. While the transmission may be addressed to the STA 206G and/or only STAs in the BSA 202C, STA 206A nonetheless may not be able to transmit or receive communications (e.g., to or from the AP 204A) until the AP 204C (and any other device) is no longer transmitting on the medium. Although not shown, the same may apply to STAs 206D-206F in the BSA 202B and/or STAs 206B-206C in the BSA 202A as well (e.g., if the transmission by the AP 204C is stronger such that the other STAs can sense the transmission on the medium).

The use of the CSMA mechanism then creates inefficiencies because some APs or STAs outside of a BSA may be able to transmit data without interfering with a transmission made by an AP or STA in the BSA. As the number of active wireless devices continues to grow, the inefficiencies may begin to significantly affect network latency and throughput. For example, significant network latency issues may appear in apartment buildings, in which each apartment unit may include an access point and associated stations. In fact, each apartment unit may include multiple access points, as a resident may own a wireless router, a video game console with wireless media center capabilities, a television with wireless media center capabilities, a cell phone that can act like a personal hot-spot, and/or the like. Correcting the inefficiencies of the CSMA mechanism may then be vital to avoid latency and throughput issues and overall user dissatisfaction.

Such latency and throughput issues may not even be confined to residential areas. For example, multiple access points may be located in airports, subway stations, and/or other densely-populated public spaces. Currently, Wi-Fi access may be offered in these public spaces, but for a fee. If the inefficiencies created by the CSMA mechanism are not corrected, then operators of the wireless networks may lose customers as the fees and lower quality of service begin to outweigh any benefits.

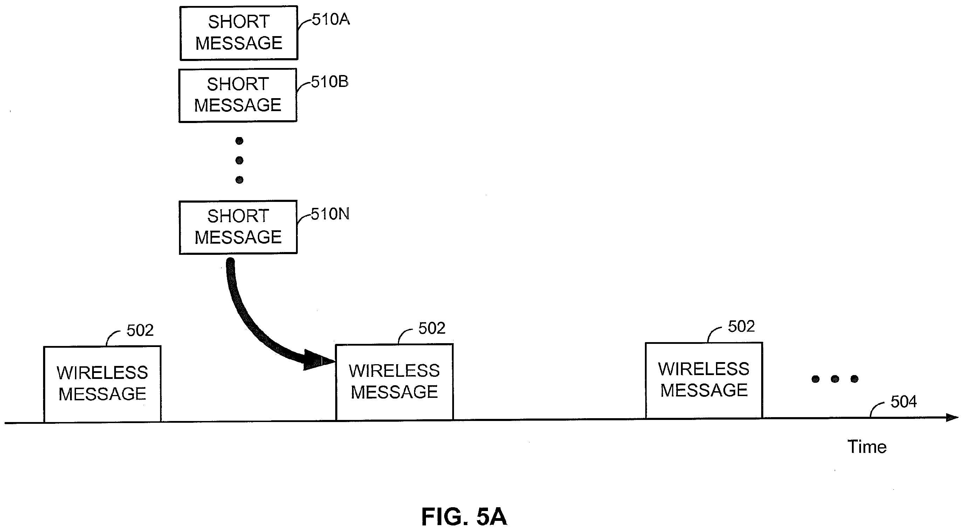

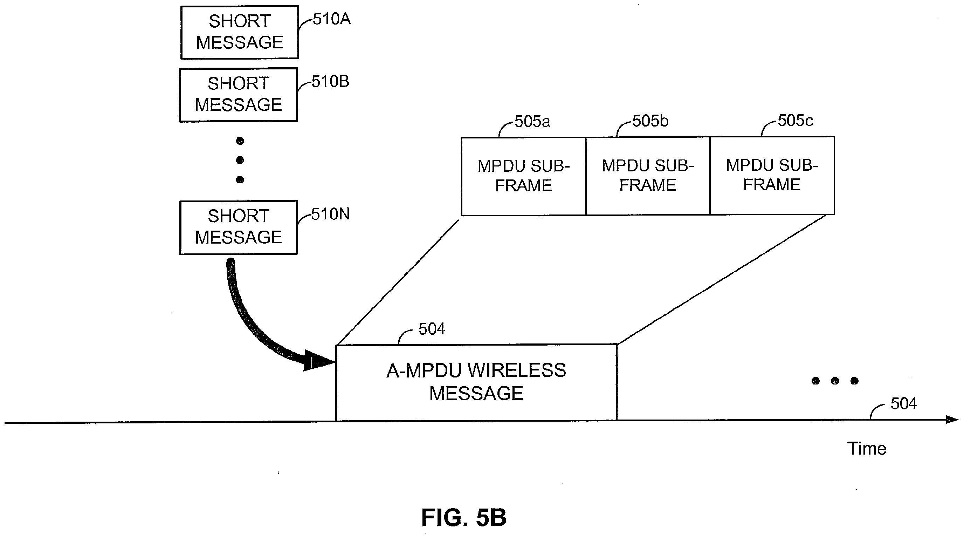

Accordingly, the high-efficiency 802.11 protocol described herein may allow for devices to operate under a modified mechanism that minimizes these inefficiencies and increases network throughput. Such a mechanism is described below with respect to FIGS. 2B, 3, and 4. Additional aspects of the high-efficiency 802.11 protocol are described below with respect to FIGS. 5-11.

FIG. 2B shows a wireless communication system 250 in which multiple wireless communication networks are present. Unlike the wireless communication system 200 of FIG. 2A, the wireless communication system 250 may operate pursuant to the high-efficiency 802.11 standard discussed herein. The wireless communication system 250 may include an AP 254A, an AP 254B, and an AP 254C. The AP 254A may communicate with STAs 256A-256C, the AP 254B may communicate with STAs 256D-256F, and the AP 254C may communicate with STAs 256G-256H.

A variety of processes and methods may be used for transmissions in the wireless communication system 250 between the APs 254A-254C and the STAs 256A-256H. For example, signals may be sent and received between the APs 254A-254C and the STAs 256A-256H in accordance with OFDM/OFDMA techniques or CDMA techniques.

The AP 254A may act as a base station and provide wireless communication coverage in a BSA 252A. The AP 254B may act as a base station and provide wireless communication coverage in a BSA 252B. The AP 254C may act as a base station and provide wireless communication coverage in a BSA 252C. It should be noted that each BSA 252A, 252B, and/or 252C may not have a central AP 254A, 254B, or 254C, but rather may allow for peer-to-peer communications between one or more of the STAs 256A-256H. Accordingly, the functions of the AP 254A-254C described herein may alternatively be performed by one or more of the STAs 256A-256H.

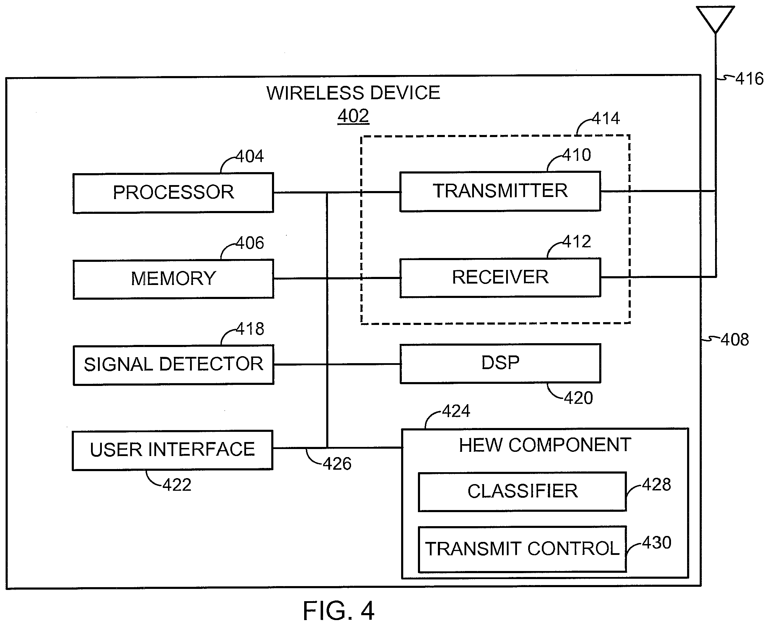

In an embodiment, the APs 254A-254C and/or STAs 256A-256H include a high-efficiency wireless component. As described herein, the high-efficiency wireless component may enable communications between the APs and STAs using the high-efficiency 802.11 protocol. In particular, the high-efficiency wireless component may enable the APs 254A-254C and/or STAs 256A-256H to use a modified mechanism that minimizes the inefficiencies of the CSMA mechanism (e.g., enables concurrent communications over the medium in situations in which interference would not occur). The high-efficiency wireless component is described in greater detail below with respect to FIG. 4.

As illustrated in FIG. 2B, the BSAs 252A-252C are physically located near each other. When, for example, AP 254A and STA 256B are communicating with each other, the communication may be sensed by other devices in BSAs 252B-252C. However, the communication may only interfere with certain devices, such as STA 256F and/or STA 256G. Under CSMA, AP 254B would not be allowed to communicate with STA 256E even though such communication would not interfere with the communication between AP 254A and STA 256B. Thus, the high-efficiency 802.11 protocol operates under a modified mechanism that differentiates between devices that can communicate concurrently and devices that cannot communicate concurrently. Such classification of devices may be performed by the high-efficiency wireless component in the APs 254A-254C and/or the STAs 256A-256H.

In an embodiment, the determination of whether a device can communicate concurrently with other devices is based on a location of the device. For example, a STA that is located near an edge of the BSA may be in a state or condition such that the STA cannot communicate concurrently with other devices. As illustrated in FIG. 2B, STAs 206A, 206F, and 206G may be devices that are in a state or condition in which they cannot communicate concurrently with other devices. Likewise, a STA that is located near the center of the BSA may be in a station or condition such that the STA can communicate with other devices. As illustrated in FIG. 2, STAs 206B, 206C, 206D, 206E, and 206H may be devices that are in a state or condition in which they can communicate concurrently with other devices. Note that the classification of devices is not permanent. Devices may transition between being in a state or condition such that they can communicate concurrently and being in a state or condition such that they cannot communicate concurrently (e.g., devices may change states or conditions when in motion, when associating with a new AP, when disassociating, etc.).

Furthermore, devices may be configured to behave differently based on whether they are ones that are or are not in a state or condition to communicate concurrently with other devices. For example, devices that are in a state or condition such that they can communicate concurrently may communicate within the same spectrum. However, devices that are in a state or condition such that they cannot communicate concurrently may employ certain techniques, such as spatial multiplexing or frequency domain multiplexing, in order to communicate over the medium. The controlling of the behavior of the devices may be performed by the high-efficiency wireless component in the APs 254A-254C and/or the STAs 256A-256H.

In an embodiment, devices that are in a state or condition such that they cannot communicate concurrently use spatial multiplexing techniques to communicate over the medium. For example, power and/or other information may be embedded within the preamble of a packet transmitted by another device. A device in a state or condition such that the device cannot communicate concurrently may analyze the preamble when the packet is sensed on the medium and decide whether or not to transmit based on a set of rules.

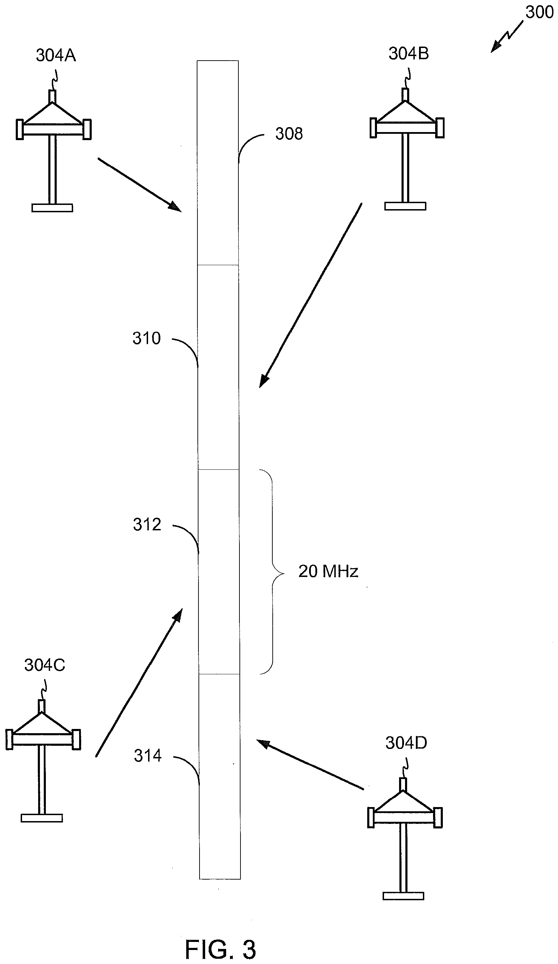

In another embodiment, devices that are in a state or condition such that they cannot communicate concurrently use frequency domain multiplexing techniques to communicate over the medium. FIG. 3 shows frequency multiplexing techniques that may be employed within the wireless communication systems 100 of FIG. 1 and 250 of FIG. 2B. As illustrated in FIG. 3, an AP 304A, 304B, 304C, and 304D may be present within a wireless communication system 300. Each of the APs 304A, 304B, 304C, and 304D may be associated with a different BSA and include the high-efficiency wireless component described herein.

As an example, the bandwidth of the communication medium may be 80MHz. Under the regular 802.11 protocol, each of the APs 304A, 304B, 304C, and 304D and the STAs associated with each respective AP attempt to communicate using the entire bandwidth, which can reduce throughput. However, under the high-efficiency 802.11 protocol using frequency domain multiplexing, the bandwidth may be divided into four 20MHz segments 308, 310, 312, and 314 (e.g., channels), as illustrated in FIG. 3. The AP 304A may be associated with segment 308, the AP 304B may be associated with segment 310, the AP 304C may be associated with segment 312, and the AP 304D may be associated with segment 314.

In an embodiment, when the APs 304A-304D and the STAs that are in a state or condition such that the STAs can communicate concurrently with other devices (e.g., STAs near the center of the BSA) are communicating with each other, then each AP 304A-304D and each of these STAs may communicate using a portion of or the entire 80MHz medium. However, when the APs 304A-304D and the STAs that are in a state or condition such that the STAs cannot communicate concurrently with other devices (e.g., STAs near the edge of the BSA) are communicating with each other, then AP 304A and its STAs communicate using 20MHz segment 308, AP 304B and its STAs communicate using 20MHz segment 310, AP 304C and its STAs communicate using 20MHz segment 312, and AP 304D and its STAs communicate using 20MHz segment 314. Because the segments 308, 310, 312, and 314 are different portions of the communication medium, a first transmission using a first segment would not interference with a second transmission using a second segment.

Thus, APs and/or STAs, even those that are in a state or condition such that they cannot communicate concurrently with other devices that include the high-efficiency wireless component can communicate concurrently with other APs and STAs without interference. Accordingly, the throughput of the wireless communication system 300 may be increased. In the case of apartment buildings or densely-populated public spaces, APs and/or STAs that use the high-efficiency wireless component may experience reduced latency and increased network throughput even as the number of active wireless devices increases, thereby improving user experience.

FIG. 4 shows an exemplary functional block diagram of a wireless device 402 that may be employed within the wireless communication systems 100, 250, and/or 300 of FIGS. 1, 2B, and 3. The wireless device 402 is an example of a device that may be configured to implement the various methods described herein. For example, the wireless device 402 may comprise the AP 104, one of the STAs 106, one of the APs 254, one of the STAs 256, and/or one of the APs 304.

The wireless device 402 may include a processor 404 which controls operation of the wireless device 402. The processor 404 may also be referred to as a central processing unit (CPU). Memory 406, which may include both read-only memory (ROM) and random access memory (RAM), may provide instructions and data to the processor 404. A portion of the memory 406 may also include non-volatile random access memory (NVRAM). The processor 404 typically performs logical and arithmetic operations based on program instructions stored within the memory 406. The instructions in the memory 406 may be executable to implement the methods described herein.

The processor 404 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

The wireless device 402 may also include a housing 408 that may include a transmitter 410 and/or a receiver 412 to allow transmission and reception of data between the wireless device 402 and a remote location. The transmitter 410 and receiver 412 may be combined into a transceiver 414. An antenna 416 may be attached to the housing 408 and electrically coupled to the transceiver 414. The wireless device 402 may also include (not shown) multiple transmitters, multiple receivers, multiple transceivers, and/or multiple antennas.

The transmitter 410 can be configured to wirelessly transmit messages, which can be referred to as "paging messages" that are configured to indicate to wireless devices whether or not the wireless devices need to wake up from a doze state and enter an awake state as discussed below. For example, the transmitter 410 can be configured to transmit paging messages generated by the processor 404, discussed above. When the wireless device 402 is implemented or used as a STA 106, the processor 404 can be configured to process paging messages. When the wireless device 402 is implemented or used as an AP 104, the processor 404 can also be configured to generate paging messages.

The receiver 412 can be configured to wirelessly receive paging messages. When the wireless device 402 is implemented or used as a STA 106, the transmitter 410 can be configured to transmit requests for data in response to the paging messages. For example, the wireless device 402 can be configured to transmit a Power-Saving Poll (PS-Poll) as will be described herein with respect to FIG. 4. When the wireless device 402 is implemented or used as an AP 104, the transmitter 410 can be further configured to transmit data to the one or more STAs 106. When the wireless device 402 is implemented or used as a STA 106, the transmitter 410 can be configured to transmit an acknowledgment to the data received from the AP 104.

The wireless device 402 may also include a signal detector 418 that may be used in an effort to detect and quantify the level of signals received by the transceiver 414. The signal detector 418 may detect such signals as total energy, energy per subcarrier per symbol, power spectral density and other signals. The wireless device 402 may also include a digital signal processor (DSP) 420 for use in processing signals. The DSP 420 may be configured to generate a packet for transmission. In some aspects, the packet may comprise a physical layer data unit (PPDU).

The wireless device 402 may further comprise a user interface 422 in some aspects. The user interface 422 may comprise a keypad, a microphone, a speaker, and/or a display. The user interface 422 may include any element or component that conveys information to a user of the wireless device 402 and/or receives input from the user.

The wireless devices 402 may further comprise a high-efficiency wireless component 424 in some aspects. The high-efficiency wireless component 424 may include a classifier unit 428 and a transmit control unit 430. As described herein, the high-efficiency wireless component 424 may enable APs and/or STAs to use a modified mechanism that minimizes the inefficiencies of the CSMA mechanism (e.g., enables concurrent communications over the medium in situations in which interference would not occur).

The modified mechanism may be implemented by the classifier unit 428 and the transmit control unit 430. In an embodiment, the classifier unit 428 determines which devices are in a state or condition such that they can communicate concurrently with other devices and which devices are in a state or condition such that they cannot communicate concurrently with other devices. In an embodiment, the transmit control unit 430 controls the behavior of devices. For example, the transmit control unit 430 may allow certain devices to transmit concurrently on the same medium and allow other devices to transmit using a spatial multiplexing or frequency domain multiplexing technique. The transmit control unit 430 may control the behavior of devices based on the determinations made by the classifier unit 428.

The various components of the wireless device 402 may be coupled together by a bus system 426. The bus system 426 may include a data bus, for example, as well as a power bus, a control signal bus, and a status signal bus in addition to the data bus. Those of skill in the art will appreciate the components of the wireless device 402 may be coupled together or accept or provide inputs to each other using some other mechanism.

Although a number of separate components are illustrated in FIG. 4, those of skill in the art will recognize that one or more of the components may be combined or commonly implemented. For example, the processor 404 may be used to implement not only the functionality described above with respect to the processor 404, but also to implement the functionality described above with respect to the signal detector 418 and/or the DSP 420. Further, each of the components illustrated in FIG. 4 may be implemented using a plurality of separate elements.

The wireless device 402 may comprise an AP 104, a STA 106, an AP 254, a STA 256, and/or an AP 304, and may be used to transmit and/or receive communications. That is, either AP 104, STA 106, AP 254, STA 256, or AP 304 may serve as transmitter or receiver devices. Certain aspects contemplate signal detector 418 being used by software running on memory 406 and processor 404 to detect the presence of a transmitter or receiver.

Referring again to FIG. 1, the STA 106 can have a plurality of operational modes. For example, the STA 106 can have a first operational mode referred to as an active mode. In the active mode, the STA 106 can always be in an "awake" state and actively transmit/receive data with the AP 104. Further, the STA 106 can have a second operational mode referred to as a power save mode. In the power save mode, the STA 106 can be in the "awake" state or a "doze" or "sleep" state where the STA 106 does not actively transmit/receive data with the AP 104. For example, the receiver 412 and possibly DSP 420 and signal detector 418 of the STA 106 can operate using reduced power consumption in the doze state. Further, in the power save mode, the STA 106 can occasionally enter the awake state to listen to messages from the AP 104 (e.g., paging messages) that indicate to the STA 106 whether or not the STA 106 needs to "wake up" (e.g., enter the awake state) at a certain time so as to be able to transmit/receive data with the AP 104.

Accordingly, in certain wireless communication systems 100, the AP 104 can transmit paging messages to a plurality of STAs 106 in a power save mode in the same network as the AP 104, indicating whether or not there is data buffered at the AP 104 for the STAs 106. The STAs 106 can also use this information to determine whether they need to be in an awake state or a doze state. For example, if an STA 106 determines it is not being paged, it can enter a doze state. Alternatively, if the STA 106 determines it can be paged, the STA 106 can enter an awake state for a certain period of time to receive the page and further determine when to be in an awake state based on the page. Further, the STA 106 can stay in the awake state for a certain period of time after receiving the page. In another example, the STA 106 can be configured to function in other ways when being paged or not being paged that are consistent with this disclosure.

In some aspects, paging messages can include a bitmap (not shown in this figure), such as a traffic identification map (TIM). In certain such aspects, the bitmap can include a number of bits. These paging messages can be sent from the AP 104 to STAs 106 in a beacon or a TIM frame. Each bit in the bitmap can correspond to a particular STA 106 of a plurality of STAs 106, and the value of each bit (e.g., 0 or 1) can indicate the state the corresponding STA 106 should be in (e.g., doze state or awake state) to be able to receive Buffed Units that the AP 104 has for that particular STA. Accordingly, the size of the bitmap can be directly proportional to the number of STAs 106 in the wireless communications system 100. Therefore, a large number of STAs 106 in the wireless communications system 100 can result in a large bitmap.

In some aspects, STAs 106 that sleep for a long time may not wake up to read any TIM messages. For example, a STA 106 can decide to sleep through one or more TIM messages in an extended sleep mode. In this case, the STA 106 can advertise to the AP 104 that the STA 106 may not read any TIM messages. Accordingly, the AP 104 may not include the corresponding identifiers in the TIM message. In various embodiments, the STAs 106 may notify the AP 104 that they may not wake up for one or more TIM messages (i.e., that they are operating in the aforementioned power saving mode) using a control message, or immediately during association.

For STAs 106 that have notified the AP 104 in this manner, the AP 104 may not include identifiers in the TIM message, even if it has BUs intended for them. STAs 106 can claim their BUs by sending a PS-Poll at any time to the AP 104. In an embodiment, AP 104 can immediately send the buffered unit (BU) in response to the PS-Poll. In another embodiment, the AP 104 can respond to the PS-Poll with an acknowledgment (ACK), and deliver the BU at a later time. In yet another embodiment, the AP 104 may not immediately respond (neither with ACK nor with BU) to a PS-Poll. The AP 104 can instead reply with a Cumulative ACK frame sent after a given scheduled time after the TIM message.

In various embodiments, the STA 106 can specify the waiting time to deliver the BU via the PS-Poll (for a dynamic indication), an association request, a probe request, and/or another management frame sent to the AP (for a static indication). In other embodiments, the AP 104 can specify the waiting time to deliver the BU via an ACK frame, a TIM element (for a dynamic indication), a beacon, an association response, a probe response, or other management frames sent to the STA 106 (for a static indication). The STA 106 can go to sleep for the waiting time duration. The STA 106 can acknowledge correct reception of the BU by sending an ACK. The STA 106 can then go back to sleep.

FIG. 5A illustrates a plurality of wireless messages 502 transmitted by the AP 104 to STAs 106 in the wireless communication system 100 of FIG. 1. As shown, time increases horizontally across the page over the time axis 504. In various embodiments, the AP 104 can receive and/or store buffered units including multiple frames 510A-510N addressed to several destination STAs 106. If the AP 104 has buffered units to send, it can transmit a plurality of wireless messages 502 to multiple STAs 106.

In various embodiments, the frames 510A-510B can be small or short frames 510A-510N and can include around 1 to around 100 bytes, around 10 to around 50 bytes, and more particularly around 20 bytes. Small frames can be generated by applications such as, for example, push notifications (e.g., email, advertisements, etc.), short messaging applications (e.g., Facebook™ postings, Twitter™ postings, text messages, etc.), upper-layer protocol overhead (e.g., transmission control protocol (TCP) acknowledgments, keep-alive messages, etc.), and the like. Accordingly, a large number of relatively small frames can generate many wireless messages, which can lead to one or more STAs 106 contending to transmit requests to the AP 104 on the medium.

FIG. 5B illustrates a single A-MPDU wireless messages 502 transmitted by the AP 104 to STAs 106 in the wireless communication system 100 of FIG. 1. As shown, time increases horizontally across the page over the time axis 504. As discussed above with respect to FIG. 5A, the AP 104 can receive and/or store buffered units including multiple frames 510A-510N addressed to several destination STAs 106. If the AP 104 has buffered units to send, instead of transmitting the multiple wireless messages 502 shown in FIG. 5A, the AP may transmit a single aggregated MPDU message 504. The A-MPDU 504 may include multiple A-MPDU sub-frames 505a-c. One or more of the multiple A-MPDU sub-frames 505a-c included in the A-MPDU 504 may be addressed to different receivers.

As the A-MPDU sub-frames 505a-c of wireless message 504 may be addressed to multiple receivers, a problem arises as to how each receiver will acknowledge any A-MPDU sub-frames 505a-c addressed to the receiver. To coordinate acknowledgements from each of the receivers, one or more of the A-MPDU sub-frames 505a-c may include one or more fields defining an acknowledgement policy for the A-MPDU sub-frame. For example, the acknowledgement policy may indicate for example, whether an acknowledgement for the A-MPDU sub-frame should be transmitted by an addressed receiver, the type of acknowledgement that should be transmitted (for example, whether an acknowledgement or block acknowledgement should be transmitted), and/or a delay time period between when the A-MPDU wireless message 504 is received and when an acknowledgement to any MPDU sub-frame included in the message 504 is transmitted. The indicated acknowledgement policy of each A-MPDU sub-frame 505a-c functions to coordinate acknowledgements of each of the MPDU sub-frames 505a-c so as to reduce the probability of collisions occurring if each of the MPDU sub-frames 550a-c is acknowledged.

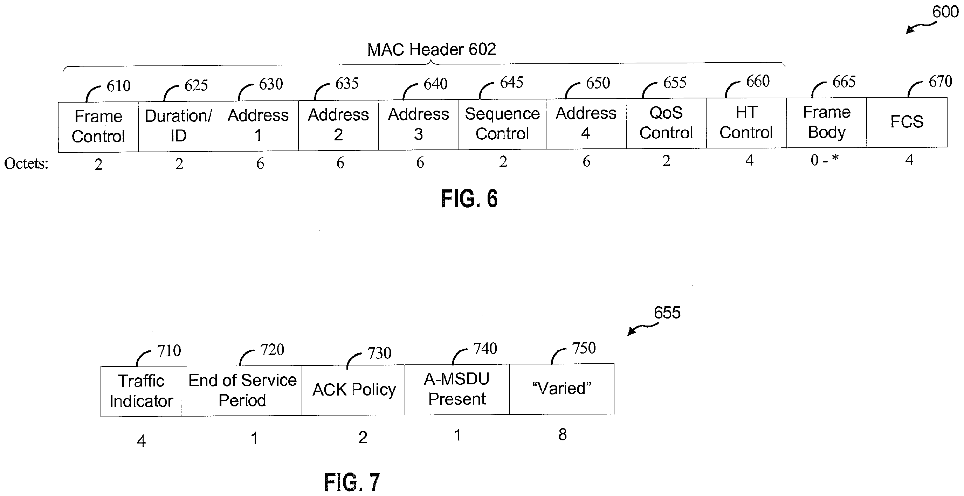

FIG. 6 shows an exemplary structure of a media access control protocol data unit (MPDU) frame 600. As shown, the MPDU frame 600 includes 11 different fields: a frame control (fc) field 610, a duration/identification (dur) field 625, a receiver address (a1) field 630, a transmitter address (a2) field 635, a destination address (a3) field 640, a sequence control (sc) field 645, a fourth address (a4) field 650, a quality of service (QoS) control (qc) field 655, a High Throughput (HT) control field 660, the frame body 665, and a frame check sequence (FCS) field 670. Some or all of the fields 610-660 make up the MAC header 602.

Each of the fields of a media access control frame may be considered a media access control parameter. Additionally, each field may be comprised of one or more sub-fields or fields. For example, frame control field 610 of media access control header 602 may be comprised of multiple subfields, such as a protocol version, type field, subtype field, and other fields. Each of these subfields or fields may also be considered a media access control parameter. In some embodiments, individual bits of a media access control frame may be considered a media access control parameter.

Each of the a1, a2, a3, and a4 fields 630, 635, 640, and 650 may comprise a full MAC address of a device, which is a 48-bit (6 octet) value. In some aspects, any of these fields may comprise an AID based on a short MAC header format. FIG. 6 further indicates the size in octets of each of the fields 610-670. The frame body field 665 comprises a variable number of octets MPDU frames of different types may include only a portion of the fields shown in FIG. 6. For example, if a MPDU frame is a control frame, the MAC header of the MPDU frame may not include the QoS control field 655 or the HT control field 660. In addition, depending on the type, the MPDU frame 600 may include additional fields. However, in some cases, regardless of the type, the MPDU frame 600 may include the frame control field 610.

FIG. 7 shows an exemplary structure of a quality of service (QoS) control (qc) field 655. As shown, the QoS control field 655 includes five (5) different fields: a traffic indicator (TID) field 710, an end of service period field 720, an acknowledgement policy field 730, an aggregated MSDU present field 740, and a "varied" field 750. In some aspects, the acknowledgement policy field 730 may indicate one of four acknowledgment policies. In some aspects, the four acknowledgement policies may include "normal acknowledgement or implicit block acknowledgement request," "no acknowledgement," "no acknowledgement or power save multi-poll (PSMP) acknowledgement," and "block acknowledgement." In some aspects the acknowledgement policy (ACK policy) field 730 and the traffic indicator (TID) field 710 may be located elsewhere in the MAC header. For example, the acknowledgement policy field and/or the TID field may be located in the frame control field 610 of the MAC header 602.

The "varied" field 750 may be a variety of different fields depending on the embodiment of the QoS Control field 655. For example, in some aspects, the "varied" field 750 may be a TXOP Limit field, an access point PS Buffer State field, a TXOP Duration Requested field, or a Queue size field.

In some aspects, if the acknowledgement policy field 730 indicates a particular value, such as "normal acknowledgement or implicit block acknowledgement request," and the MPDU frame 600 is included as part of an A-MPDU frame, the addressed recipient of the MPDU frame may transmit an acknowledgement frame or a block acknowledgement frame, either if the MPDU 600 is transmitted individually or transmitted as part of an A-MPDU. The transmission of the acknowledgement or block acknowledgement may begin at a Short Interframe Space (SIFS) time period after the PPDU carrying the MPDU frame 600. In some aspects, if the acknowledgement policy field 730 indicates "no acknowledgement," the addressed recipient of the MPDU frame takes no action upon receipt of the MPDU sub-frame. In some aspects, if the acknowledgement policy field 730 indicates "block acknowledgement," the addressed recipient of the MPDU frame takes no action upon the receipt of the frame except for recording a state. The recipient can expect a block acknowledgement request frame in the future to which it will respond.

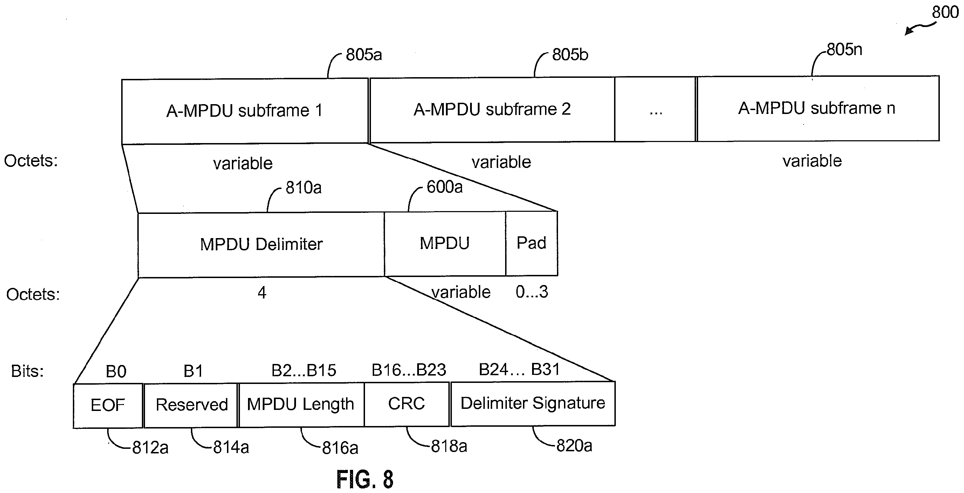

FIG. 8 shows an exemplary structure of an aggregated MPDU (A-MPDU) frame 800. As shown, the A-MPDU frame 800 includes a variable number (n) of A-MPDU subframes, as shown 805a, 805b, and 805n. Each of the A-MPDU sub-frames 805a, 805b, and 805n may in some aspects be comprised of an MPDU delimiter field 810a, an MPDU frame 600a, and zero or more pad bytes. The MPDU frame 600a may in some aspects conform substantially with the MPDU frame 600 illustrated in FIG. 6.

Each of the MPDU delimiter fields, for example, MPDU delimiter field 810a, may include an end of frame (EOF) field 812a, a reserved field 814a, an MPDU length field 816a, a CRC field 818a, and a delimiter signature field 820a.

In some aspects, the end of frame field 812 may be set to one (1) in the A-MPDU sub-frame 805a if the A-MPDU sub-frame 805a is the only A-MPDU sub-frame with an MPDU length field 816a with a non-zero value. In some aspects, the end of frame field 812a may be set to zero (0) for each A-MPDU sub-frame 805 in the A-MPDU frame 800 that has a non-zero MPDU length field 816a that is not the only A-MPDU sub-frame with a non-zero MPDU length field.

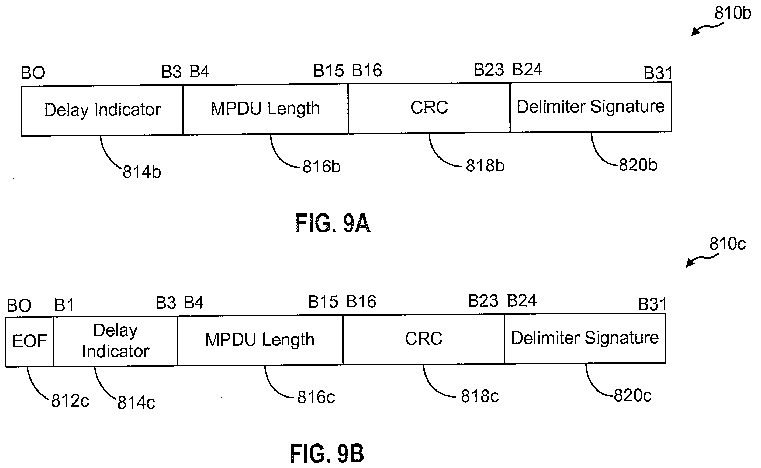

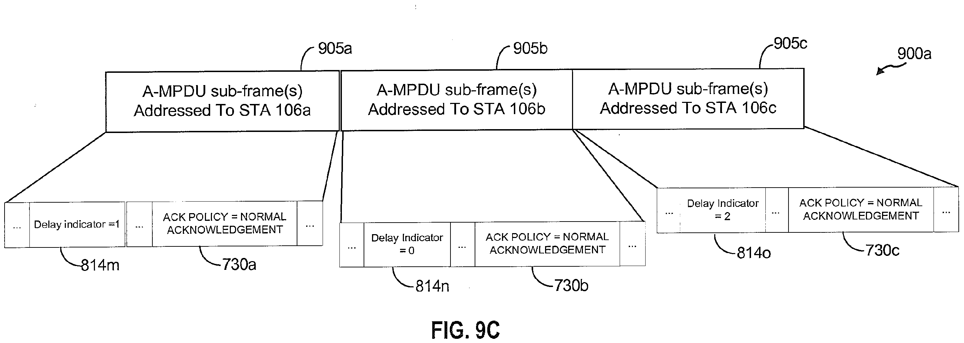

FIG. 9A shows an embodiment of an MPDU delimiter field 810b. In some aspects, the MPDU delimiter field 810b may be substituted for the MPDU delimiter field 810a illustrated in FIG. 8. For example, A-MPDU 900a, discussed below with respect to FIG. 9C, may utilize the MPDU delimiter field 810b. The MPDU delimiter field 810b includes four fields: a delay indicator field 814b, an MPDU length field 816b, a CRC field 818b, and a delimiter signature field 820b. In some aspects, separate copies of the delay indicator field 814b in each of the A-MPDU subframes 905a-c discussed below with respect to FIG. 9C may indicate the delay indicator values 814m-o if the MPDU delimiter field 810b is included in each of A-MPDU sub-frames 905a-c.

FIG. 9B shows an embodiment of an MPDU delimiter field 810c. In some aspects, the MPDU delimiter field 810c may be substituted for the MPDU delimiter field 810a illustrated in FIG. 8. For example, A-MPDU 900a may utilize the MPDU delimiter field 810c. The MPDU delimiter field 810c includes five fields: an end of frame indicator field 812c, a delay indicator field 814c, an MPDU length field 816c, a CRC field 818c, and a delimiter signature field 820c. In some aspects, separate copies of the delay indicator field 814c may indicate the delay indicator values 814m-o illustrated in FIG. 9C below if the MPDU delimiter field 810c is included in each of A-MPDU subframes 905a-c.

FIG. 9C shows an A-MPDU 900a that includes at least three A-MPDU sub-frames 905a-c. A first A-MPDU sub-frame 905a indicates a receiver address equivalent to a station address of the STA 106a. Similarly, a second A-MPDU sub-frame 905b indicates a receiver address equivalent to a station address of the STA 106b. A third sub-frame 905c indicates a receiver address equivalent to a station address of the STA 106c. In some other non-illustrated aspects, the A-MPDU 900a may include more than three A-MPDU sub-frames. For example, the A-MPDU may include four, five, six, seven, eight, nine, ten or more sub-frames. In some aspects, some or all of any additional sub-frames in the A-MPDU 900a may indicate receiver addresses of any of the STAs 106a-c or other stations, access points, or relays.

As discussed above with respect to the MPDU 600, and QoS Control field 655, each A-MPDU sub-frame 905a-c of the A-MPDU 900a shown in FIG. 9A may include a QoS Control field or some other field that includes an acknowledgement policy indication. For example, each A-MPDU sub-frame 905a-c may conform with the format of MPDU 600, which includes a QoS Control field as shown in FIG. 7.

In the illustrated implementation, three A-MPDU sub-frames 905a-c included in the A-MPDU 900a include three different receiver addresses, for example, in a receiver address field such as the address 1 field 630 illustrated in the MPDU frame 600 of FIG. 6. The three A-MPDU sub-frames included in the A-MPDU 900a also include three different acknowledgement policies associated with the three different receiver address field.

The acknowledgement procedures in the illustrated aspect is inferred from one or more fields in the MPDU delimiter and the Ack policy field included in the MPDU to which the MPDU delimiter is associated to: a delay indicator field 814m-o, an EOF field if present, and an acknowledgement policy field 730a-c. In some aspects, the delay indicator fields 814m-o substantially conform to the format of the delay indicator field 814 shown in FIG. 9A. In some aspects, the acknowledgement policy fields 730a-c substantially conform to the format of the acknowledgement policy field 730 of FIG. 7.

As shown in FIG. 9C, all three of the A-MPDU sub-frames 905a-c include an acknowledgement policy set to "normal acknowledgement." In some wireless standards, for example, the 802.11ah standard, this may correspond to a particular value such as "normal acknowledgement or implicit block acknowledgement request." Each of the A-MPDU sub-frames 905a-c has a different delay indicator value.

Based on the values of the acknowledgement policy fields 730a-c and the delay indicator fields 814m-o, A-MPDU 900a indicates that the STA 106a should acknowledge correct reception of the MPDU 905a first. In some aspects, A-MPDU sub-frame 905a should be acknowledged at SIFS time after completion of the transmission/reception of A-MPDU 900a, since the delay indicator is set to a zero value. Note that, in general, one or more MPDUs may be addressed to any of the STAs 106a-c. In such an embodiment, if a single MPDU is addressed to a given receiver it can determine whether to respond with an ACK frame if the EOF field is set to 1 or respond with a BlockAck otherwise. Generally, in some aspects, the amount of delay may be determined based on equation (1):

$$\text{Delay} = \text{SIFS} + (\text{delay indicator} * (\text{SIFS} + \text{K})) \qquad (1)$$

Where K is equal to the duration of time required for the receiver to transmit a control response to the transmitter. In some aspects, a transmitting device may require one or more receivers to follow precise rules for the transmission of the response frames so that the duration K is deterministic and equal for all receivers. Examples of these rules may include precise MCS and bandwidth selection rules and also may require the receivers to respond with the same response frame (e.g., by including A-MPDU sub-frames addressed to each receiver that indicate an acknowledgement should be sent in the A-MPDU, the transmitter instructs the receivers to respond with an ACK frame for the corresponding A-MPDU sub-frame. Similar rules may apply for requesting only block Ack frames as a response in which case the duration of K may be longer).

Within a particular A-MPDU frame, each delay indicator field may be set to a unique value, at least for any A-MPDU sub-frames for which the transmitter requests an acknowledgement from the receiving device. In some aspects, if an A-MPDU sub-frame is addressed to a group of STAs, the transmitter sets the ACK policy to "no acknowledgement," which indicates that no response is expected. In some aspects, the delay indicator may be a value used by another MPDU sub-frame. In some aspects, the delay indicator for an A-MPDU sub-frame indicating an acknowledgement policy of "no acknowledgement" may be a random or uninitialized value.

In some aspects, after the delay determined by Equation 1 elapses, transmission of an acknowledgement of an A-MPDU sub-frame may be performed if the acknowledgment policy of the A-MPDU sub-frame is set to "normal acknowledgement or implicit block acknowledgement." In FIG. 9C, all three sub-frames 905a-c may be acknowledged in this manner.

Since the delay indicator 814n for the A-MPDU sub-frame 905b is zero (0), STA 106b should acknowledge A-MPDU sub-frame 905b at SIFS time after transmission of the A-MPDU 900a. In some aspects, A-MPDU 900a further indicates that STA 106a should acknowledge transmission of the MPDU sub-frame 905a at SIFS + 1 * (SIFS + K) = 2 SIFS + constant time after transmission of the A-MPDU 900a, since the acknowledgement delay indicator field 814m is set to one (1). Similarly, A-MPDU 900a indicates STA 106c should acknowledge transmission of the MPDU sub-frame 905c at 3 SIFS + 2 K after transmission of the A-MPDU 900a, since the acknowledgement delay indicator value field 814o is set to two (2).

By including different acknowledgement policies for two or more, in this case, three receiver addresses indicated by the A-MPDU 900a, the AP 104 may effectively manage reception of one acknowledgement response by one of the three devices corresponding to the three receiver addresses (STA 106a-c) at SIFS time after transmission of the A-MPDU 900a. In this embodiment, some STAs e.g., 106a and 106c may wait for a time period before transmitting their acknowledgements based on an indication in the A-MPDU sub-frame delimiter field. In some aspects, this reduces the probability of a collision between at least two acknowledgements for at least two A-MPDU sub-frames included in the A-MPDU 900a at SIFS time after transmission of the A-MPDU 900a. Although three A-MPDU sub-frames are illustrated in the A-MPDU frame 900a in FIG. 9C, in some aspects, two, or more than three receiver addresses may be indicated by the A-MPDU 900a. For example, the A-MPDU 900a may include A-MPDU sub-frames addressed to two or four or more devices. Such an A-MPDU will also include at least two different acknowledgement policies, corresponding to at least two of the receiver addresses indicated by the A-MPDU sub-frames included in the A-MPDU 900a. Note that in some aspects an AP may request different acknowledgement policies based on a traffic identifier (TID) and/or on a per-MPDU basis. Those skilled in the art may appreciate that the acknowledgement procedures described herein are easily extendable to these embodiments.

In addition to having multiple receiver addresses in an A-MPDU (wherein one or more of the A-MPDU sub-frames have different receiver addresses, as discussed above, one or more of the A-MPDU sub-frames may have a different transmitter address, meaning that one or more of the A-MPDU sub-frames may have been received by the transmitter from one or more different source devices. For example, a transmitter of an A-MPDU that includes two or more MPDUs may set the A2 field 635 (i.e., the transmitter address) in the MAC header of each MPDU to a different MAC address which is useful to reduce overhead. An embodiment where an transmitter may implement setting different transmitter addresses may include when the transmitter is an AP that has multiple BSSIDs (each BSSID identifying a BSS with which the AP is associated) and the AP needs transmit multiple MPDUs to STAs that are associated with any of the BSSs with which the AP is associated. An additional embodiment may exist where the transmitter provides relay or mesh functionality and operates to forward frames that need to be exchanged between multiple STAs that may not be within their respective transmission ranges; accordingly, the transmitter may aggregate in an A-MPDU multiple MPDUs that are received from different STAs and transmit the A-MPDU to one or more destinations wherein each MPDU has an A2 address that indicates the source address of the MPDU (i.e., the STA that generated the frame). For example, in some embodiments a transmitter may aggregate: one or more MPDUs that have a common A1 address (receiver) and A2 address (transmitter); one or more MPDUs that have different A1 addresses (receivers) and common A2 address (transmitter) (multiple receiver-single transmitter); one or more MPDUs that have a common A1 address (receiver) and different A2 addresses (transmitter (single receiver-multiple transmitters); or one or more MPDUs that have different A1 addresses (receivers) and different A2 addresses (transmitters) (multiple receivers-multiple transmitters. Such aggregation may reduce overhead and improve medium efficiency.

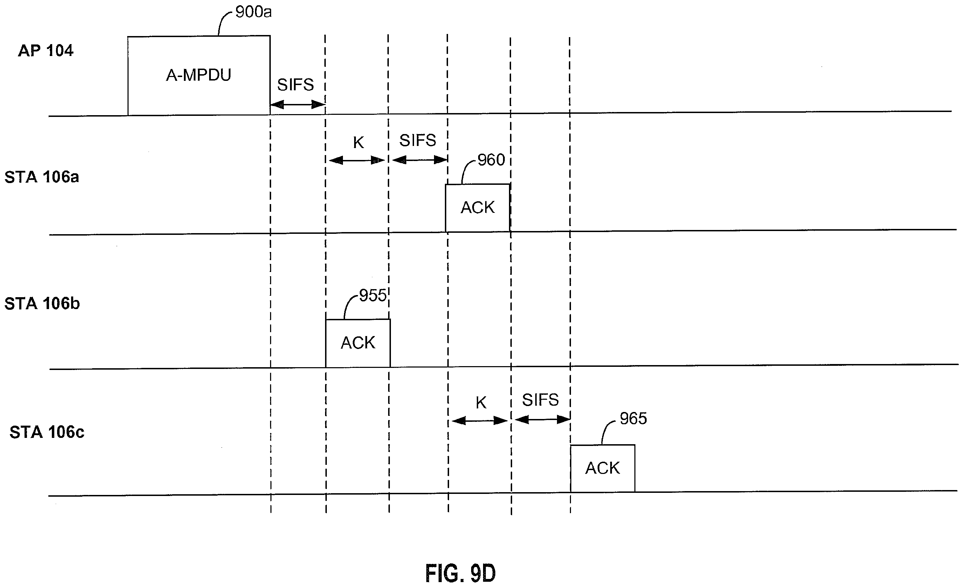

FIG. 9D illustrates an exemplary wireless communication between an AP 104 and three stations STA 106a, STA 106b, and STA 106c. The wireless communication begins with the AP 104 transmitting an A-MPDU packet 900a. In some aspects, the A-MPDU 900a may be broadcast. In some other aspects, the A-MPDU 900a may be multicast to a multicast group that includes the stations STA 106a, STA 106b and STA 106c. In some aspects, the format of the A-MPDU 900a shown in FIG. 9D may substantially conform with the A-MPDU 900a illustrated in FIG. 9C, and/or the format of the A-MPDU 800 shown in FIG. 8.

FIG. 9D shows the STA 106b transmitting an acknowledgement packet 955 SIFS time after transmission of the A-MPDU 900a is complete. STA 106b transmits the acknowledgement packet 955 at the illustrated time based on the acknowledgement policy 730b and acknowledgement delay indicator value 814n in the A-MPDU sub-frame 905b, which is illustrated in FIG. 9C. Next, STA 106a transmits an acknowledgement packet 960 at 2 SIFS + constant K after transmission of the A-MPDU 900a is completed. The time at which STA 106a transmits the acknowledgement 960 is based on the acknowledgement policy 730a and acknowledgment delay indicator value 814m indicated by the A-MPDU sub-frame 905a as illustrated in FIG. 9C. While constant K is shown as equivalent to the time necessary to transmit acknowledgment 955, in some other aspects, the constant time K may be greater than the time necessary to transmit acknowledgment 955.

In certain aspects an AP may only instruct a receiving STA to acknowledge reception of the MPDU if it is a unicast transmission (i.e., address of the receiving STA is a unicast address). However in certain embodiments where groupcast (broadcast) frames are included in the A-MPDU, the AP may selectively request one STA from the group set to send an acknowledgement response by including a null MPDU in the A-MPDU addressed to the single STA. The acknowledgement policy of the null MPDU may be set to a particular value, such as "normal acknowledgement or implicit block acknowledgement request." This procedure may be useful to allow the transmitter to estimate whether the groupcast packet is received at least in part by one receiver. Those skilled in the art may appreciate that this procedure of selecting a receiver from a group of devices to acknowledge correct reception of an MPDU within an A-MPDU may increase the reliability of multicast transmissions by enabling a transmitting device to identify if the A-MPDU has potentially collided with other network traffic. The selection of the responding device may be based on one or more metrics, which may allow maximizing the reliability of the acknowledgement.

Next, STA 106c transmits an acknowledgement packet 965 at 3 SIFS + 2 constant K after transmission of the A-MPDU 900a is completed. The time at which STA 106c transmits the acknowledgement 965 is based on the acknowledgement policy 730c and acknowledgment delay indicator value 814o, indicated by the A-MPDU sub-frame 905c as illustrated in FIG. 9C. While constant K is shown as equivalent to the time necessary to transmit acknowledgment 960 in FIG. 9D, in some other aspects, the constant time K may be greater than the time necessary to transmit acknowledgment 960.

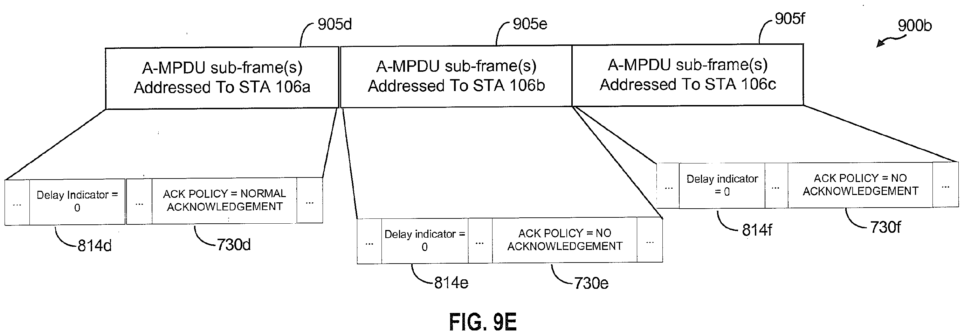

FIG. 9E illustrates an embodiment of an A-MPDU 900b. A-MPDU 900b includes at least three A-MPDU sub-frames 905d-f. Each of the three A-MPDU sub-frames 905d-f are addressed to one of STAs 106a-c respectively. The format of A-MPDU 900b may substantially conform to that of A-MPDU 800. In some aspects, the MPDU delimiter field format 810b may be utilized in the A-MPDU 900b instead of the MPDU delimiter 810a. In some aspects, the MPDU delimiter field format 810c may be utilized in the A-MPDU 900b instead of either 810a or 810b.

Similar to the A-MPDU sub-frames 905a-c of FIG. 9C, the A-MPDU sub-frames 905d-f each provide an acknowledgment delay indicator field value 814d-f and an acknowledgement policy field 730d-f. The format of the delay indicator fields 814d-f may substantially conform with the delay indicator field 814b of MPDU delimiter 810b, shown in FIG. 9A. In some aspects, the format of the delay indicator fields 814d-f may substantially conform with the delay indicator field 814c of MPDU delimiter 810c, shown in FIG. 9B. The format of the acknowledgement policy fields 730d-f may substantially conform with acknowledgement policy field 730 of FIG. 7.

Similar to the A-MPDU 900a of FIG. 9C, the first A-MPDU sub-frame 905d of A-MPDU 900b has an acknowledgement policy field 730d set to a value of normal acknowledgement. Since the delay indicator value 814d of A-MPDU sub-frame 905d is set to zero, STA 106a will acknowledge A-MPDU sub-frame 905d SIFS time after transmission of the A-MPDU 900b. Each of A-MPDU sub-frames 905e-f indicate an acknowledgement policy field 730e-f set to "no acknowledgment." Therefore, the MPDUs 905e-f will not be acknowledged by STAs 106b-c respectively. Because the policy fields 730e-f are set to "no acknowledgement," in some aspects, each of STAs 106b and 106c may not decode or act on the value of the delay indicator fields 814e-f.

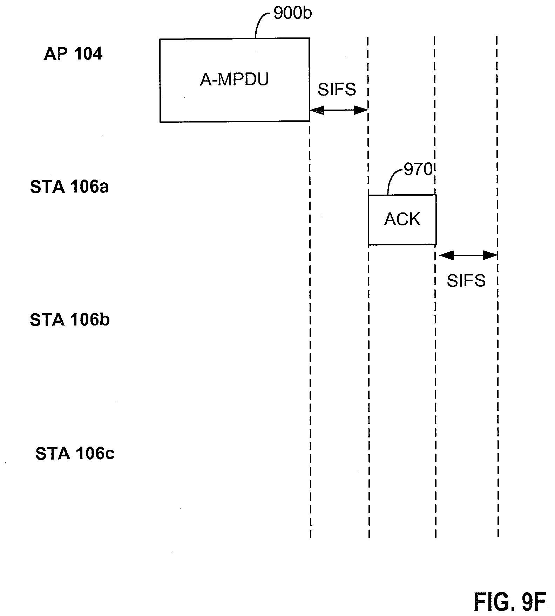

FIG. 9F illustrates an exemplary wireless communication between an AP 104 and three STAs 106a-c. The wireless communication begins with the AP 104 transmitting an A-MPDU packet 900b. In some aspects, the A-MPDU 900b may be broadcast. In some other aspects, the A-MPDU 900b may be multicast to a multicast group that includes the stations STA 106a, STA 106b and STA 106c. In some aspects, the format of the A-MPDU 900b shown in FIG. 9F may substantially conform with the A-MPDU 800 illustrated in FIG. 8. In some aspects, the A-MPDU 900b may include three A-MPDU sub-frames. One aspect of the A-MPDU 900b is shown in FIG. 9E above.

Next, STA 106a transmits an acknowledgement packet 970 SIFS time after transmission of the A-MPDU 900b is complete. STA 106a transmits the acknowledgement packet 970 at the illustrated time based on the acknowledgement policy 730d and acknowledgement delay indicator value 814d indicated by the A-MPDU sub-frame 905d illustrated in FIG. 9E. Since the delay indicator value 814d of A-MPDU sub-frame 905d is set to zero, STA 106a will acknowledge A-MPDU sub-frame 905 SIFS time after transmission of the A-MPDU 900b.

Unlike FIG. 9D where STAs 106b-c each transmit acknowledgements of A-MPDUs 905b-c back to the AP 104, FIG. 9F illustrates that STAs 106b-c do not acknowledge A-MPDUs 905e-f of A-MPDU 900b shown in FIG. 9E. The STAs 106b-c do not acknowledge A-MPDUs 905e-f based on the acknowledgement policy fields 730e-f being set to a value of "no acknowledgement," as shown in FIG. 9D.

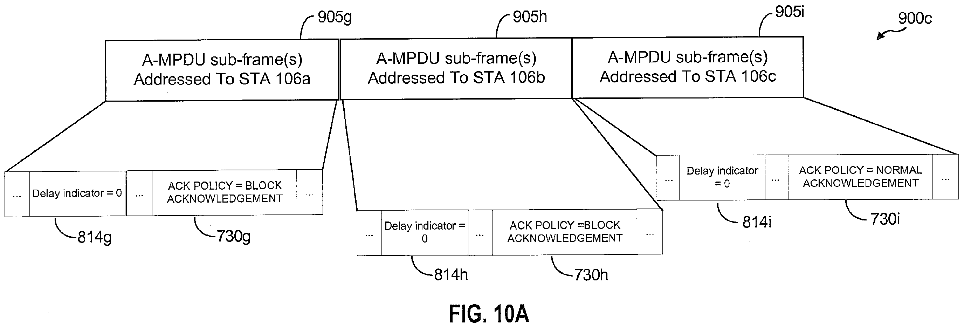

FIG. 10A illustrates an embodiment of an A-MPDU 900c. A-MPDU 900c includes at least three A-MPDU sub-frames 905g-i. Similar to the A-MPDU sub-frames 905a-f of FIGs. 9E-F, the A-MPDU sub-frames 905g-i each indicate an acknowledgment delay indicator field value 814g-i and an acknowledgement policy field 730g-i value. In some aspects, each of A-MPDU sub-frames 905g-i may substantially conform with the format of A-MPDU 800 of FIG. 8. In some aspects, the MPDU delimiter field 810b may be substituted for MPDU delimiter field 810a of A-MPDU 800. In some aspects, the MPDU delimiter field 810c may be substituted for MPDU delimiter field 810a of A-MPDU 800.

The first A-MPDU sub-frame 905g of the A-MPDU 900c indicates an acknowledgement policy field 730g of block acknowledgement. This value indicates a receiver of the A-MPDU 905g should not acknowledge the A-MPDU 905g SIFS time after the A-MPDU 900c is transmitted/received. Instead, the acknowledgement policy field 730g indicates to the STA 106a, which receives the A-MPDU 905g, that it should wait for an explicit acknowledgement request before acknowledging the A-MPDU 905g. Similarly, the acknowledgement policy field 730h of A-MPDU sub-frame 905h also indicates block acknowledgement. Therefore, A-MPDU 905h indicates that STA 106b should wait for an explicit block acknowledgement request before acknowledging the A-MPDU 905h. The acknowledgment policy field 730i of A-MPDU sub-frame 905i indicates that the STA 106c, which receives A-MPDU 905i, should acknowledge A-MPDU 905i SIFS time after transmission of the A-MPDU 900c is complete, since the acknowledgement delay indicator field 814i of the MPDU 905i is set to zero (0) as discussed above. Because both of acknowledgement policy fields 730g-h are set to block acknowledgment, the values of the delay indicator fields 814g-h may be ignored by STAs 106a-b in some aspects.

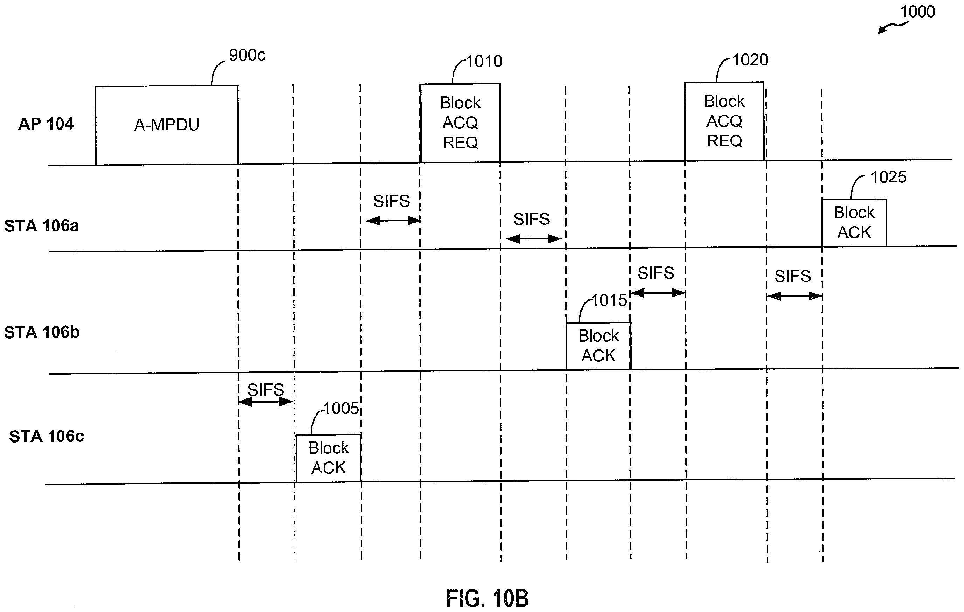

FIG. 10B shows an exemplary wireless communication between an AP 104 and three STAs 106a-c. First, the AP 104 transmits an A-MPDU 900c. In some aspects, the A-MPDU 900c provides field values equivalent to those shown in A-MPDU 900c of FIG. 10A. As discussed above with respect to FIG. 10A, the A-MPDU sub-frame 905i shown in FIG. 10A, which is addressed to STA 106c, indicates an acknowledgment policy of normal acknowledgement. Therefore, because the delay indicator field 814i is zero, STA 106c acknowledges the A-MPDU sub-frame 905i SIFS time after completion of the transmission of the A-MPDU frame 900c. This is shown via the transmission of block acknowledgment frame 1005.

Since each of the A-MPDU sub-frames 905g-h indicate an acknowledgement policy of "block acknowledgment," STAs 106a-b will not acknowledge A-MPDU sub-frames 905g-h without an explicit block acknowledgment request. Therefore, as shown in FIG. 10B, AP 104 transmits a block acknowledgement request 1010 to STA 106b. In response, STA 106b transmits a block acknowledgment 1015 for the A-MPDU 905h SIFS time after receiving the block acknowledgment request 1010. Similarly, AP 104 transmits a block acknowledgement request 1020 to STA 106a. In response, STA 106a transmits a block acknowledgment message 1025 for the A-MPDU 905g to the AP 104 SIFS time after receiving the block acknowledgment request 1020.

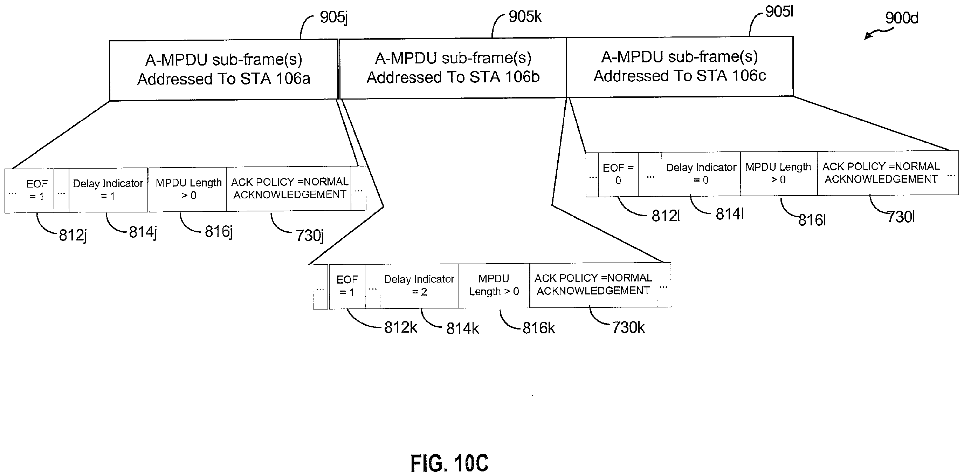

FIG. 10C illustrates an embodiment of an A-MPDU 900d. The A-MPDU 900d includes at least three A-MPDU sub-frames 905j-l. The A-MPDU 900d may conform with the frame field format described above with respect to A-MPDU 800. For example, each A-MPDU sub-frame may include a MPDU delimiter field and an MPDU field (neither of which are explicitly shown). As shown in the example MPDU delimiter field 810c shown in FIG. 9B, the MPDU delimiter field of A-MPDU sub-frames 905j-l may include an EOF field 812j-l, a delay indicator field 814j-l, and an MPDU Length field 816j-l. A control field of each MPDU sub-frame 905j-l includes the acknowledgement policy fields 730j-l.

In some aspects, the EOF field 812 of the MPDU delimiter may indicate whether an A-MPDU sub-frame should be acknowledged using an acknowledgement frame or a block acknowledgement frame. For example, in some aspects, if an end of frame field 812j-1 is clear (zero), a block acknowledgment should be transmitted in response to reception of the corresponding A-MPDU sub-frame. If the EOF field 812j-l is set (one), then an acknowledgement frame should be transmitted in response to reception of the corresponding A-MPDU sub-frame. The block acknowledgement and regular acknowledgements to the A-MPDU sub-frames illustrated in FIG. 10C may operate similarly to the previously disclosed embodiments of, for example, FIGs. 9C - 10B. For example, each A-MPDU sub-frame 905g-i may specify an acknowledgement policy in fields 730j-l that operate similarly to previously discussed acknowledgement policy fields, such as any of acknowledgement policy fields 730a-i. The delay indicator fields 802j-l may also operate in a manner similar to any one of previously discussed delay indicator fields 802a-l or m-o.

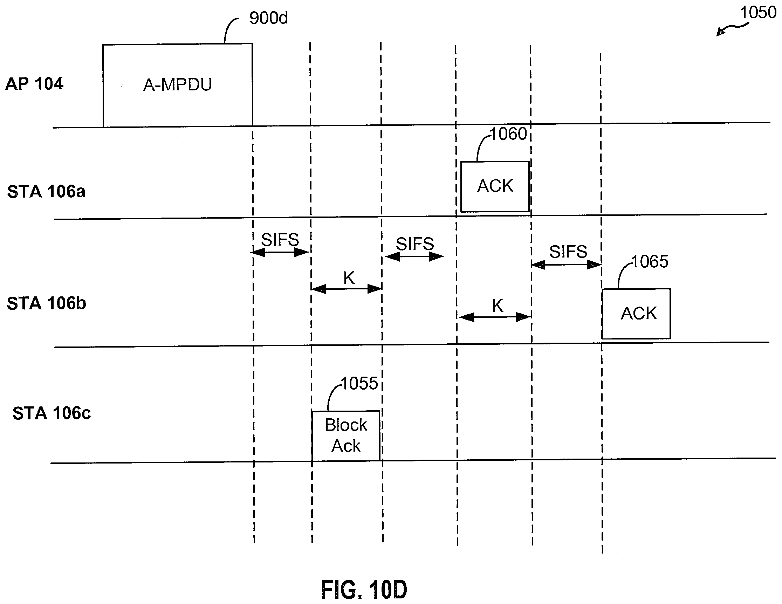

FIG. 10D shows an exemplary wireless communication between an AP 104 and three STAs 106a-c. First, the AP 104 transmits an A-MPDU 900d. In some aspects, the A-MPDU 900d indicates field values indicated by the A-MPDU 900d of FIG. 10C.

As the delay indicator field 814l of A-MPDU sub-frame 905i includes a zero delay value, STA 106c acknowledges the A-MPDU addressed to it (905i) at SIFS time after transmission of the A-MPDU 900d. Since the EOF field 812l of A-MPDU sub-frame 905i is clear (zero), STA 106c acknowledges the A-MPDU sub-frame with a block acknowledgement frame 1055.

Next, based on the delay indicator value 814j, STA 106a transmits an acknowledgment frame 1060 at a time according to Equation (1) above. An acknowledgement frame is transmitted by STA 106a because the EOF field 812j is set to one. STA 106b then transmits an acknowledgement of A-MPDU sub-frame 905k based on delay indicator field 814k. Because the EOF field 812k is set, an acknowledgement frame 1065 is transmitted instead of a block acknowledgment frame.

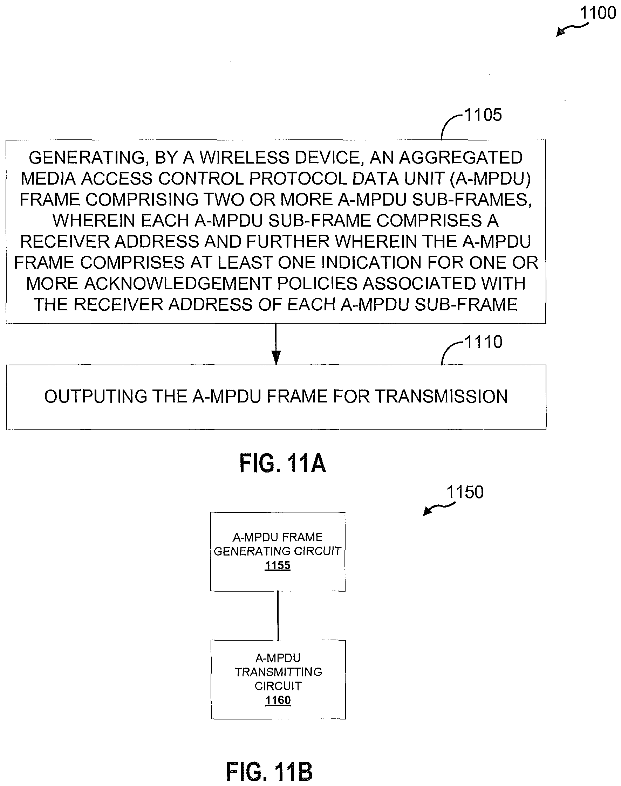

FIG. 11A is a flowchart of one exemplary method of wireless communication. In some aspects, the process 1100 may be performed by the wireless device 202, shown above with respect to FIG. 2. In some aspects, process 1100 may be performed by the AP 104.

In block 1105, an aggregated media access control protocol data unit (A-MPDU) frame is generated by the wireless device. The A-MPDU frame includes two or more A-MPDU sub-frames generated in block 1105. Each of the A-MPDU sub-frames include a receiver address. The A-MPDU frame comprises at least one indication for one or more acknowledgement policies associated with each receiver address of each A-MPDU sub-frame. Each of the two or more A-MPDU sub-frames include control fields, the control fields indicating the one or more acknowledgment policies for each corresponding A-MPDU sub-frame. In some aspects, more than two A-MPDU subframes are generated in block 1105. In some aspects, more than two different acknowledgement policies are indicated by the A-MPDU sub-frames generated in block 1105. In some aspects, two or more of the A-MPDU sub-frames within the A-MPDU frame may be generated to have the same receiver address. In some embodiments, these acknowledgement polices may be indicated by control fields, delimiter fields, or a combination of control fields and delimiter fields in each of the A-MPDU sub-frames.

In some aspects, the control fields indicating the acknowledgement policies are acknowledgement policy control fields in a QoS control field of each of the A-MPDU sub-frames. In some aspects, the format of the QoS control fields of each of the A-MPDU sub-frames may conform substantially to the QoS control field 655 illustrated in FIG. 7.

In some aspects, the acknowledgement policy field of the QoS control frame may be set to a particular value such as "normal acknowledgement or implicit block acknowledgement." In some aspects, this value corresponds to 0b00. If set to the particular value, the acknowledgement policy indicates that an acknowledgement for the corresponding A-MPDU sub-frame should be transmitted by a receiver of the A-MPDU sub-frame after a time delay. In some aspects, the time delay is SIFS time after transmission/reception of an A-MPDU frame including the A-MPDU sub-frame. To reduce collisions of acknowledgements transmitted for A-MPDU sub-frames, in some aspects, only one acknowledgement policy of the generated A-MPDU sub-frames will be set to a particular value, such as "normal acknowledgement or implicit block acknowledgement."

The acknowledgement policy field 730 in some A-MPDU sub-frames may be set to "no acknowledgement." If set to "no acknowledgement," a receiver should not acknowledge the corresponding A-MPDU sub-frame. In some aspects, a value of "no acknowledgement" corresponds to 0b10. In some aspects, the acknowledgement policy field may be set to a value of "block acknowledgement." In some aspects, this value corresponds to 0b11. If set to "block acknowledgement," the acknowledgement policy field indicates a receiver of the corresponding A-MPDU sub-frame may receive a request for a block acknowledgement message at a later time, and that no acknowledgment of the corresponding A-MPDU sub-frame should be transmitted SIFS time after reception of an A-MPDU including the corresponding A-MPDU sub-frame is complete.

In some aspects, the acknowledgement policy is further indicated by a delay indicator field in a control field. In some aspects, the delay indicator field may be included in an MPDU delimiter field. For example, the delay indicator field may be as shown by delay indicator field 814b of MPDU delimiter field 810b of FIG. 9A. In some other aspects, the delay indicator field may be as shown by delay indicator field 814a of MPDU delimiter field 810a of FIG. 8. In some other aspects, the delay indicator field may be as shown by delay indicator field 814c of MPDU delimiter field 810c of FIG. 9B.

The delay indicator field may indicate a delay that should elapse before acknowledging the corresponding A-MPDU sub-frame. In some aspects, the delay indicator field may indicate a back-off counter. In some aspects, the delay indicator may represent a multiple of a SIFS time or a SIFS time plus a counter value. A device receiving the corresponding A-MPDU sub-frame should delay transmission of an acknowledgement by the determined delay value. In some aspects, if the acknowledgment policy field is set to a particular value, such as "normal acknowledgment or implicit block acknowledgement" as discussed above, the delay indicator field indicates a delay between reception/transmission of the A-MPDU sub-frame or A-MPDU frame and a transmission time of an acknowledgement of the frame.

In some aspects, the acknowledgement policy is indicated by an end of frame (EOF) field. For example, in some aspects, the A-MPDU subfields may include an MPDU delimiter field of a format substantially in accordance with the MPDU delimiter field 810a. In these aspects, the acknowledgement policy may be indicated by the EOF field 812a of MPDU delimiter 810a. In some other aspects, the acknowledgement policy may be indicated by the EOF field 812c of MPDU delimiter field 810c.

In block 1110, the A-MPDU frame is transmitted by the wireless device. When performed by a wireless device that includes one or more antennas, the A-MPDU frame may be transmitted using the one or more antennas.

In some aspects, the method further includes transmitting, by the wireless device, a request for acknowledgement to a receiver address indicated by one of the A-MPDU sub-frames. In some aspects this request is a block acknowledgment request. The request for acknowledgement may be transmitted if an acknowledgement policy indicated by the A-MPDU sub-frame indicates a block acknowledgement policy. The request for acknowledgement may be transmitted after a delay greater than a SIFS time period after transmission of the A-MPDU in block 1115. This delay may provide an opportunity for one A-MPDU sub-frame in the transmitted A-MPDU frame to be acknowledged. An A-MPDU sub-frame with an acknowledgement policy set to a particular value, such as "normal acknowledgement or implicit block acknowledgement" may be acknowledged during this delay.

In some aspects, the method further includes receiving, by the wireless device, one or more acknowledgements for one or more of the A-MPDU sub-frames included in the transmitted A-MPDU frame. In some aspects, one of these acknowledgements is received SIFS time after completion of the transmission of the A-MPDU frame in block 1115. For example, an A-MPDU frame with an acknowledgement policy set to a particular value, such as "normal acknowledgment or implicit block acknowledgement," or an A-MPDU frame with an end of frame indication set may be acknowledged during this time.

Some aspects may further base the timing for A-MPDU sub-frame acknowledgements on a delay indicator field as discussed above. For example, in some aspects, an A-MPDU sub-frame with an acknowledgement policy set to a particular value (such as "normal acknowledgement or implicit block acknowledgement" of an appropriate 802.11 standard) will also need to have a delay indicator field set to a zero or minimum delay value in order for that A-MPDU sub-frame to be acknowledged SIFS time after transmission of the A-MPDU frame in block 1115 is completed.

Other frames may be acknowledged in response to the transmission of an explicit acknowledgement request by the wireless device, such as a block acknowledgement request, as described above.

FIG. 11B is a functional block diagram of an exemplary wireless device 1150 that may be employed within the wireless communication system 100. The device 1150 comprises an A-MPDU frame generating circuit 1155 and an A-MPDU transmitting circuit 1160. The A-MPDU frame generating circuit 1155 may be configured to perform one or more of the functions discussed above with respect to the block 1105 illustrated in FIG. 11A. The A-MPDU frame generating circuit 1155 may correspond to one or more of the processor 404 and/or the DSP 420, and/or a processing system. The device 1150 further comprises an A-MPDU frame transmitting circuit 1160. In some aspects, the A-MPDU frame transmitting circuit 1160 may be configured to perform one or more of the functions discussed above with respect to block 1110. In some aspects, the A-MPDU frame transmitting circuit 1160 may include the transmitter 410. In some aspects, the frame transmitting circuit may be further configured to transmit a request for acknowledgement to a receiver address indicated by one of the A-MPD sub-frames. In some implementations, means for generating an aggregated media access control protocol data unit (A-MPDU) frame comprising two or more A-MPDU sub-frames and/or means for generating two or more A-MPDU sub-frames may include the A-MPDU generating frame circuit 1155. In some implementations, means for transmitting the A-MPDU frame may comprise the A-MPDU transmitting circuit.

In some aspects, the device 1150 further comprises a decoding circuit. The decoding circuit may be configured to decode a block acknowledgement for a A-MPDU sub-frame if an end of frame (EOF) field of an A-MPDU sub-frame, which is generated by the A-MPDU frame generating circuit 1155 is set to zero. In some aspects, the decoding circuit may correspond to one or more of the processor 404 and/or the DSP 420, and/or a processing system. The decoding circuit may be further configured, in some aspects, to decode an acknowledgement for an A-MPDU sub-frame if an end of frame (EOF) field of an A-MPDU sub-frame, which is generated by the A-MPDU frame generating circuit 1155 is set. In some aspects, the device 1150 further comprises a decoding circuit. The decoding circuit may decode an acknowledgement of receipt of the at least one of the two or more A-MPDU sub-frames received after a delay greater than or equal to a short inter-frame space time after transmission of the A-MPDU frame. In some aspects, the decoding circuit may correspond to the processor 404 or the DSP 420, and/or a processing system. In some implementations, means for decoding an acknowledgement of receipt may include the decoding circuit. In some aspects, the device 1150 further comprises a value setting circuit. The setting circuit may be configured to set a value in the end of frame field to indicate a frame to be sent in receipt according to the acknowledgement policy of the A-MPDU sub-frame. In some aspects, the setting circuit may correspond to the processor 404 or the DSP 420, and/or a processing system. In some implementations, means for setting a value of the end of frame field comprises the setting circuit.

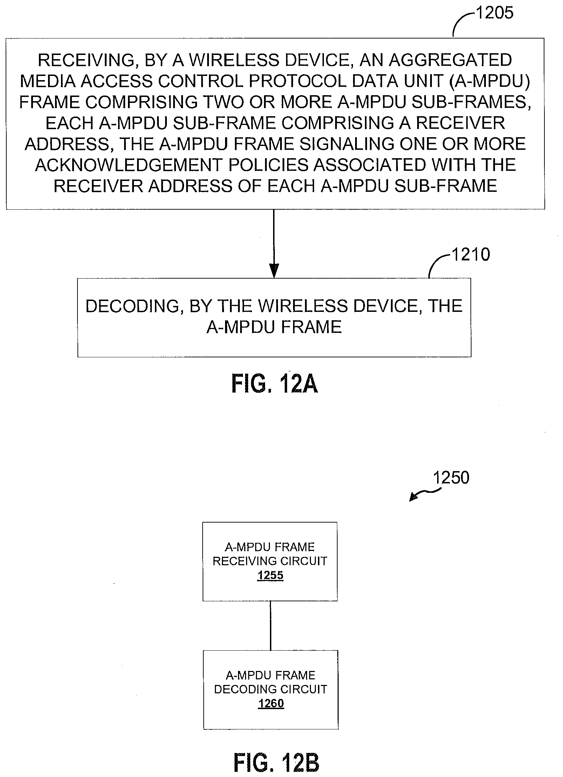

FIG. 12A is a flowchart of one exemplary method of wireless communication. In some aspects, the process 1200 may be performed by the wireless device 202, shown above with respect to FIG. 2. In some aspects, process 1200 may be performed by a STA 106.

In block 1205, an aggregated media access control protocol data unit (A-MPDU) frame is received by a wireless device. The A-MPDU frame includes two or more A-MPDU sub-frames. In some aspects, the A-MPDU sub-frames substantially conform with the format of one of frames 900a-d discussed above.

In block 1210, the A-MPDU frame is decoded by the wireless device. In some aspects, a receiving device identifies one or more of the A-MPDU sub-frames included in the A-MPDU frame that are addressed to the device. In some aspects, this is accomplished by comparing a receiver address specified in each of the A-MPDU sub-frames to a local device address of the wireless device. In some aspects, the receiver address specified in one or more of the A-MPDU sub-frames is a broadcast or multicast address. In this case, the receiving device may determine whether it is included in a multicast group indicated by the multicast address of the A-MPDU sub-frame.

Once the receiving device has identified the A-MPDU sub-frames addressed to the receiver, the receiving device may determine an acknowledgement policy of each of the A-MPDU sub-frames addressed to the receiver. In some aspects, if an acknowledgement policy field of a QoS Control field of the A-MPDU sub-frame is set to "no acknowledgement," then no acknowledgement of the particular A-MPDU sub-frame will be transmitted by the receiving device. If the acknowledgement policy field is set to "block acknowledgement," reception of the A-MPDU sub-frame may be stored, but no acknowledgement will be transmitted by the device until a subsequent acknowledgement request is received. In some aspects, the received acknowledgement request will be a block acknowledgement request.

If an acknowledgement policy field of a QoS Control field is set to a particular value (such as a value corresponding to "normal acknowledgment or implicit block acknowledgement" of an appropriate 802.11 standard), then the receiving device may transmit an acknowledgment SIFS time after reception of the A-MPDU frame is complete. In some aspects, the transmission time of the acknowledgement will be further based on a delay indicator field. In some aspects, the delay indicator field is provided in a MPDU delimiter field of an A-MPDU sub-frame. For example, in some aspects, the MPDU delimiter field may substantially conform to the format of MPDU delimiter field 810b, shown in FIG. 9B. In some aspects, the delay indicator field may indicate a back-off value. For example, the delay indicator field may indicate a multiple of a SIFS time or a multiple of a SIFS time + a constant value the receiver should wait before acknowledging the corresponding A-MPDU sub-frame.

In some aspects, determining an acknowledgement policy of an A-MPDU sub-frame may be based on an end of frame field. In some aspects, the end of frame field is included in an MPDU delimiter field as shown in MPDU delimiter fields 810a or 810c. In some aspects, if the end of frame field is set, an acknowledgement of the A-MPDU is transmitted SIFS time after reception of the A-MPDU frame. In some aspects, if the end of frame field is clear (zero), no acknowledgement of the A-MPDU sub-frame may be transmitted at SIFS time after reception of the A-MPDU frame.

Some aspects further include reception of an acknowledgement request for one or more of the A-MPDU sub-frames included in the A-MPDU frame. For example, if an A-MPDU sub-frame indicates an acknowledgement policy of "block acknowledgement," a receiver will not acknowledge the A-MPDU sub-frame until reception of an explicit acknowledgement request. When an acknowledgement request for an A-MPDU sub-frame received, an acknowledgement of the A-MPDU sub-frame may be transmitted, based on at least whether the A-MPDU sub-frame is received.

FIG. 12B is a functional block diagram of an exemplary wireless device 1250 that may be employed within the wireless communication system 100. The device 1250 comprises an A-MPDU frame receiving circuit 1255, and an A-MPDU frame decoding circuit 1260. The A-MPDU frame receiving circuit 1255 may be configured to perform one or more of the functions discussed above with respect to the block 1205 illustrated in FIG. 12A. The A-MPDU frame receiving circuit 1255 may correspond to one or more of the receiver 412. The device 1250 further comprises an A-MPDU frame decoding circuit 1260. The A-MPDU frame decoding circuit 1260 may be configured to perform one or more of the functions discussed above with respect to the block 1210 illustrated in FIG. 12A. In some aspects, the A-MPDU frame decoding circuit 1260 may correspond to the processor 404. In some implementations, means for receiving an aggregated media access control protocol data unit (A-MPDU) frame may include the A-MPDU receiving frame circuit 1255. In some implementations, means for decoding two or more A-MPDU sub-frames based on the received A-MPDU frame, means for decoding a receiver address corresponding to each of the two or more A-MPDU subframes, or means for determining that at least one of the two or more A-MPDU subframes decoded from the received A-MPDU frame is addressed to the apparatus based on the decoded receiver address for each of the two or more A-MPDU sub-frames may include the A-MPDU decoding circuit 1260.

In some aspects, the device 1250 further comprises a decoding circuit. The decoding circuit may be configured to decode A-MPDU sub-frames based on a received A-MPDU frame. The decoding circuit may be configured to decode A-MPDU sub-frames based on a received A-MPDU frame. The decoding circuit may be configured to decode a receiver address corresponding to each of the two or more A-MPDU subframes. The decoding circuit may be configured to decode a MPDU delimiter field in the at least one of the two or more A-MPDU sub-frames. In some aspects, the decoding circuit may correspond to the processor 404, the DSP 420, and/or the processing system. In some implementations, means for decoding A-MPDU sub-frames and means for decoding a receiver address may include the decoding circuit.

In some aspects, the device 1250 further comprises a determining circuit. The determining circuit may be configured to determine that at least one of the two or more A-MPDU sub-frames decoded from the received A-MPDU frame is addressed to the apparatus based on the decoded receiver address for each of the two or more A-MPDU sub-frames. The determining circuit may also be configured to determine a time delay from a value stored in the MPDU delimiter field, that is to elapse after reception of the A-MPDU frame and before transmission of the acknowledgement frame. In some aspects, the determining circuit may correspond to the processor 404, the DSP 420, and/or the processing system. In some implementations, means for determining may include the determining circuit.

In some aspects, the device 1250 further comprises an acknowledgement policy decoding circuit. The acknowledgement policy decoding circuit may be configured to decode an acknowledgement policy for each of the two or more A-MPDU sub-frames based on at least one indication associated with the receiver address of each A-MPDU sub-frame in corresponding one or more fields of each of the two or more A-MPDU sub-frames. In some aspects, the acknowledgement decoding circuit may correspond to the processor 404. In some implementations, means for decoding the acknowledgement policy may include the acknowledgement decoding circuit.

In some aspects, the device 1250 further comprises an end of frame field decoding circuit. The end of frame field decoding circuit may be configured to decode a value in an end of frame field in the at least one of the two or more A-MPDU sub-frames, the value indicating a type of request for acknowledgement of receipt for the acknowledgement policy of each of the two or more A-MPDU sub-frames. In some aspects, the end of frame field decoding circuit may correspond to the processor 404, the DSP 420, and/or the processing system. In some implementations, means for decoding the end of frame field may include the end of frame field decoding circuit.

In some aspects, the device 1250 further comprises a frame generating circuit. The frame generating circuit may generate an acknowledgement frame or a block acknowledgement frame for the at least one of the two or more A-MPDU sub-frames based on the value in the end of frame field. In some aspects, the end of frame generating circuit may correspond to the processor 404, the DSP 420, and/or a processing system. In some implementations, means for generating an acknowledgement frame may include the frame generating circuit.

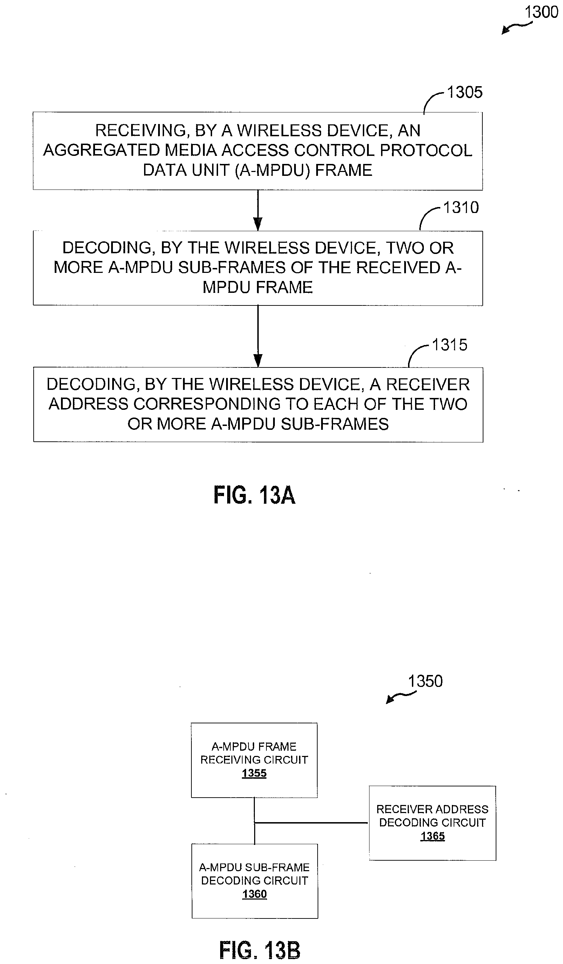

FIG. 13A is a flowchart of one exemplary method of wireless communication. In some aspects, the process 1300 may be performed by the wireless device 202, shown above with respect to FIG. 2. In some aspects, process 1300 may be performed by a STA 106.

In block 1305, an aggregated media access control protocol data unit (A-MPDU) frame is received by a wireless device. In block 1310, two or more A-MPDU sub-frames of the received A-MPDU frame are decoded by the wireless device. In some aspects, the decoded A-MPDU sub-frames substantially conform with the format of one of frames 900a-d discussed above.

In block 1315, a receiver address corresponding to each of the two or more A-MPDU sub-frames are decoded by the wireless device. In some aspects, the receiver address specified in one or more of the A-MPDU sub-frames is a broadcast or multicast address. In this case, the receiving device may determine whether it is included in a multicast group indicated by the multicast address of the A-MPDU sub-frame.

In some aspects, a device performing process 1300 may compare each of the decoded receiver addresses to a local address of the decoding device. If the receiver address in one or more of the A-MPDU sub-frames matches a local receiver address, the receiving device may then further decode the received A-MPDU sub-frame.

Once the receiving device has identified the A-MPDU sub-frames addressed to the receiving device, the receiving device may determine an acknowledgement policy of each of the A-MPDU sub-frames addressed to the receiver. For example, in some aspects, the receiving device may decode an acknowledgement policy indicated by the receiver A-MPDU sub-frame. In some aspects, the acknowledgement policy may be indicated by one or more of an acknowledgement policy field in a control field, a delay indicator field in a MPDU delimiter field, and/or an end of frame field included in a MPDU delimiter field.

In some aspects, if an acknowledgement policy field of a QoS Control field of the A-MPDU sub-frame is set to a value corresponding to "no acknowledgement," then no acknowledgement of the particular A-MPDU sub-frame will be transmitted by the receiving device. If the acknowledgement policy field is set to "block acknowledgement," reception of the A-MPDU sub-frame may be stored, but no acknowledgement will be transmitted until a subsequent acknowledgement request is received. In some aspects, the received acknowledgement request will be a block acknowledgement request.

If an acknowledgement policy field of a QoS Control field is set to a particular value In some aspects, the particular value corresponds to a value of "normal acknowledgment or implicit block acknowledgement" as defined by an appropriate 802.11 standard) then the receiving device may transmit an acknowledgment SIFS time after reception of the A-MPDU frame is complete. In some aspects, the transmission time of the acknowledgement will be further based on a delay indicator field. In some aspects, the delay indicator field is provided in a MPDU delimiter field of a A-MPDU sub-frame. For example, in some aspects, the MPDU delimiter field may substantially conform to the format of MPDU delimiter field 810b, shown in FIG. 9B. In some aspects, the delay indicator field may indicate a back-off value. For example, the delay indicator field may indicate a multiple of a SIFS time or a multiple of a SIFS time + a constant value the receiver should wait before acknowledging the corresponding A-MPDU sub-frame.

In some aspects, determining an acknowledgement policy of an A-MPDU sub-frame may be based on an end of frame field. In some aspects, the end of frame field is included in an MPDU delimiter field as shown in MPDU delimiter fields 810a or 810c. In some aspects, if the end of frame field is set, an acknowledgement of the A-MPDU is transmitted SIFS time after reception of the A-MPDU frame. In some aspects, if the end of frame field is clear (zero), a block acknowledgement of the A-MPDU sub-frame may be transmitted at SIFS time after reception of the A-MPDU frame. In some other aspects, if the end of frame field is clear (zero), no acknowledgement is transmitted at SIFS time after reception of the A-MPDU frame.

Some aspects further include reception of an acknowledgement request for one or more of the A-MPDU sub-frames included in the A-MPDU frame. For example, in some aspects, if an A-MPDU sub-frame indicates an acknowledgement policy of "block acknowledgement," a receiver will not acknowledge the A-MPDU sub-frame until reception of an explicit block acknowledgement request. When an acknowledgement request for an A-MPDU sub-frame received, an acknowledgement of the A-MPDU sub-frame may be transmitted, based on at least whether the A-MPDU sub-frame is received.

FIG. 13B is a functional block diagram of an exemplary wireless device 1350 that may be employed within the wireless communication system 100. The device 1350 comprises an A-MPDU frame receiving circuit 1355, an A-MPDU sub-frame decoding circuit 1360, and a receiver address decoding circuit 1365. The A-MPDU frame receiving circuit 1355 may be configured to perform one or more of the functions discussed above with respect to the block 1305 illustrated in FIG. 13A. The A-MPDU frame receiving circuit 1355 may correspond to one or more of the receiver 412. The device 1350 further comprises an A-MPDU sub-frame decoding circuit 1360. The A-MPDU sub-frame decoding circuit 1360 may be configured to perform one or more of the functions discussed above with respect to the block 1310 illustrated in FIG. 13A. In some aspects, the A-MPDU sub-frame decoding circuit 1360 may be configured to decode an acknowledgement policy of one A-MPDU sub-frame. In some aspects, the A-MPDU sub-frame decoding circuit 1360 may be further configured to decode an end of frame field in an A-MPDU sub-frame..In some aspects, the A-MPDU sub-frame decoding circuit 1360 may correspond to the processor 404, and/or the DSP 420, and/or a processing system. The device 1350 further comprises a receiver address decoding circuit 1365. The receiver address decoding circuit 1365 may be configured to perform one or more of the functions discussed above with respect to the block 1315 illustrated in FIG. 13A. In some aspects, the receiver address decoding circuit 1365 may correspond to the processor 404, and/or the DSP 420, and/or a processing system.

In some aspects, the device 1350 may further include a determining circuit.. In some aspects, the determining circuit may be further configured to determine a time delay for transmitting a control frame. The determining circuit may be configured to determine a time delay for transmitting a control frame based on an A-MPDU delimiter field of an A-MPDU sub-frame In some aspects, the determining circuit may correspond to the processor 404, and/or the DSP 420, and/or a processing system.

Some aspects of device 1350 may further include a transmitting circuit. The transmitting circuit may be configured to transmit a control frame if an acknowledgment policy is set to a particular value. In some aspects, the transmitting circuit may correspond to the transmitter 410.

In some aspects, the device 1350 may further include a receiving circuit. The receiving circuit may be configured to receive a request for an acknowledgment for an A-MPDU sub-frame. In some aspects, the receiving circuit may correspond to the receiver 412.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like. Further, a "channel width" as used herein may encompass or may also be referred to as a bandwidth in certain aspects.

As used herein, a phrase referring to "at least one of" a list of items refers to any combination of those items, including single members. As an example, "at least one of: a, b, or c" is intended to cover: a, b, c, a-b, a-c, b-c, and a-b-c.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

As used herein, the term interface may refer to hardware or software configured to connect two or more devices together. For example, an interface may be a part of a processor or a bus and may be configured to allow communication of information or data between the devices. The interface may be integrated into a chip or other device. For example, in some embodiments, an interface may comprise a receiver configured to receive information or communications from a device at another device. The interface (e.g., of a processor or a bus) may receive information or data processed by a front end or another device or may process information received. In some embodiments, an interface may comprise a transmitter configured to transmit or communicate information or data to another device. Thus, the interface may transmit information or data or may prepare information or data for outputting for transmission (e.g., via a bus).

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk, and Blu-ray® disc where disks usually reproduce data magnetically, while discs reproduce data optically with lasers. Thus, in some aspects, computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.

## Claims

1. A method of wireless communication, comprising:

   generating (1105), by an apparatus, an aggregated media access control protocol data unit, A-MPDU, frame (900d) comprising two or more A-MPDU sub-frames (905j, 905k, 9051),
   wherein each A-MPDU sub-frame comprises a receiver address and further
   wherein the A-MPDU frame comprises at least one indication for one or more acknowledgement policies associated with the receiver address of each A-MPDU sub-frame,
   wherein generating the A-MPDU frame comprises
   generating a request for an acknowledgement of receipt in an end of frame field (812j, 812k, 8121) in at least one of the two or more A-MPDU sub-frames,
   wherein a value in the end of frame field (812j, 812k, 812l) determines a type of the request for an acknowledgement of receipt; and
   outputting (1110) the A-MPDU frame (900d) for transmission.

2. The method of claim 1, wherein at least one of the one or more acknowledgement policies indicates that a control response frame is to be transmitted after reception of the A-MPDU frame (900d) comprising the two or more A-MPDU sub-frames.

3. The method of claim 2, wherein the at least one of the one or more acknowledgement policies further indicates that the control response frame is to be transmitted a short inter-frame space time after reception of the A-MPDU frame (900d) comprising the two or more A-MPDU sub-frames and/or wherein the at least one of the one or more acknowledgement policies further indicates that the control response frame is to be transmitted if the at least one of the one or more acknowledgement policies is set to a particular value.

4. The method of claim 1, wherein at least one of the two or more A-MPDU sub-frames further comprises a media access control protocol data unit, MPDU, delimiter field (810a), the MPDU delimiter field (810) storing a value that indicates a time delay that is to elapse after reception of the at least one of the two or more A-MPDU sub-frames and before an acknowledgement of the at least one of the two or more A-MPDU sub-frames is transmitted, wherein the time delay indicated by the MPDU delimiter field (810a) of the at least one of the two or more A-MPDU sub-frames is based on a back-off value also indicated in the MPDU delimiter field (810a), wherein the back-off value indicated in the MPDU delimiter field (810a) is based on at least one of a short inter-frame space time or a constant value.

5. The method of claim 1, further comprising receiving the acknowledgement of receipt of the at least one of the two or more A-MPDU sub-frames after a delay greater than or equal to a short inter-frame space time after transmission of the A-MPDU frame (900d).

6. The method of claim 1, further comprising:
setting the value of the end of frame field (812j, 812k, 812l) in the at least one of the two or more A-MPDU sub-frames to indicate that the type of the request for acknowledgment of receipt for the at least one of the two or more A-MPDU sub-frames is an acknowledgement frame.

7. The method of claim 1, further comprising:
setting the value of the end of frame field (812j, 812k, 812l) in the at least one of the two or more A-MPDU sub-frames to indicate that the type of the request for acknowledgment of receipt for the at least one of the two or more A-MPDU sub-frames is an block acknowledgement frame.

8. An apparatus, comprising:

means (1155) for generating an aggregated media access control protocol data unit, A-MPDU, frame (900d) comprising two or more A-MPDU sub-frames (905j, 905k, 905l), wherein each A-MPDU sub-frame comprises a receiver address and further wherein the A-MPDU frame (900d) comprises at least one indication for one or more acknowledgement policies associated with the receiver address of each A-MPDU sub-frame, wherein the means (115) for generating the A-MPDU frame (900d) are configured to generate a request for an acknowledgement of receipt in an end of frame field (812j, 812k, 812l) in at least one of the two or more A-MPDU sub-frames, wherein a value in the end of frame field (812j, 812k, 812l ) determines a type of the request for an acknowledgement of receipt; and
means (1160) for transmitting the A-MPDU frame (900d).

9. A method of wireless communication, comprising:

receiving (1205), by an apparatus, an aggregated media access control protocol data unit, A-MPDU, frame (900d);
decoding (1210), by the apparatus, two or more A-MPDU sub-frames (905j, 905k, 905l) of the received A-MPDU frame (900d);
decoding, by the apparatus, a receiver address corresponding to each of the two or more A-MPDU sub-frames; and
determining that at least one of the two or more A-MPDU sub-frames of the received A-MPDU frame (900d) is addressed to the apparatus based on the decoded receiver address for each of the two or more A-MPDU sub-frames; and
decoding a request for an acknowledgement of receipt in an end of frame field (812j, 812k, 812l) in at least one of the two or more A-MPDU sub-frames, wherein a value in the end of frame field (812j, 812k, 812l) determines a type of the request for an acknowledgement of receipt.

10. The method of claim 9, further comprising:

generating an acknowledgement frame acknowledging receipt of the at least one of the two or more A-MPDU sub-frames if the decoded value in the end of frame field (812j, 812k, 812l) is one; and
outputting for transmission the acknowledgement frame.

11. The method of claim 9, further comprising:

generating a block acknowledgement frame acknowledging receipt of the at least one of the two or more A-MPDU sub-frames if the decoded value in the end of frame field (812j, 812k, 812l) is zero; and
outputting for transmission the block acknowledgement frame.

**12.** The method of claim 11, further comprising:

decoding a media access control protocol data unit, MPDU, delimiter field (810a) in the at least one of the two or more A-MPDU sub-frames;

determining a time delay, from a value stored in the MPDU delimiter field, that is to elapse after reception of the A-MPDU frame and before outputting for transmission the acknowledgement frame; and

outputting for transmission the acknowledgement frame after the time delay elapses based on the one or more acknowledgement policies corresponding to each of the two or more A-MPDU sub-frames.

**13.** The method of claim 12, wherein the value stored in the MPDU delimiter field (810a) is a back-off value, wherein the back-off value stored in the MPDU delimiter field (810a) is based on at least one of a short inter-frame space time or a constant value.

**14.** An apparatus for wireless communication, comprising:

means (1255) for receiving an aggregated media access control protocol data unit, A-MPDU, frame (900d);

means (1260) for decoding two or more A-MPDU sub-frames (905j, 905k, 9051) based on the received A-MPDU frame (900d);

means for decoding a receiver address corresponding to each of the two or more A-MPDU sub-frames;

means for determining that at least one of the two or more A-MPDU sub-frames decoded from the received A-MPDU frame (900d) is addressed to the apparatus based on the decoded receiver address for each of the two or more A-MPDU sub-frames; and

means for decoding a request for an acknowledgement of receipt in an end of frame field (812j, 812k, 8121) in at least one of the two or more A-MPDU sub-frames, wherein a value in the end of frame field (812j, 812k, 812l) determines a type of the request for an acknowledgement of receipt.

**15.** A computer readable medium comprising instructions that when executed by a processor cause the processor to perform the method of any one of claims 1 to 7 or 9 to 13.

**Patentansprüche**

**1.** Ein Verfahren zur Drahtloskommunikation, das Folgendes aufweist:

Generieren (1105), durch eine Vorrichtung, eines A-MPDU-Rahmens (A-MPDU = aggregated media access control protocol data unit bzw. aggregierte Medienzugriffssteuerungsprotokolldateneinheit) (900d), der zwei oder mehr A-MPDU-Subrahmen (905j, 905k, 905l) aufweist,

wobei jeder A-MPDU-Subrahmen eine Empfängeradresse aufweist und weiter

wobei der A-MPDU-Rahmen wenigstens eine Anzeige für eine oder mehrere Bestätigungsregeln aufweist, die mit der Empfängeradresse jedes A-MPDU-Subrahmens assoziiert sind,

wobei das Generieren des A-MPDU-Rahmens Folgendes aufweist Generieren einer Anfrage hinsichtlich einer Bestätigung eines Empfangs in einem End-of-Frame- bzw. Rahmenende-Feld (812j, 812k, 8121) in wenigstens einem der zwei oder mehr A-MPDU-Subrahmen,

wobei ein Wert in dem Rahmenende-Feld (812j, 812k, 8121) einen Typ der Anfrage für eine Bestätigung eines Empfangs bestimmt; und

Ausgeben (1110) des A-MPDU-Rahmens (900d) zur Sendung bzw. Übertragung.

**2.** Verfahren nach Anspruch 1, wobei wenigstens eine der einen oder der mehreren Bestätigungsregeln anzeigt, dass ein Steuerantwortrahmen nach einem Empfang des A-MPDU-Rahmens (900d), der die zwei oder mehr A-MPDU-Subrahmen aufweist, gesendet werden soll.

**3.** Verfahren nach Anspruch 2, wobei die wenigstens eine der einen oder der mehreren Bestätigungsregeln weiter anzeigt, dass der Steuerantwortrahmen eine Zeit eines kurzen Abstands zwischen Rahmen bzw. eine SIFS-Zeit (SIFS = short inter-frame space) nach einem Empfang des A-MPDU-Rahmens (900d), der die zwei oder mehr A-MPDU-Subrahmen aufweist, gesendet werden soll und/oder wobei die wenigstens eine der einen oder der mehreren Bestätigungsregeln weiter anzeigt, dass der Steuerantwortrahmen gesendet werden soll, wenn die wenigstens eine der einen oder der mehreren Bestätigungsregeln auf einen bestimmten Wert eingestellt ist.

4. Verfahren nach Anspruch 1, wobei der wenigstens eine der zwei oder mehr A-MPDU-Subrahmen weiter ein Medienzugriffssteuerungsprotokolldateneinheit-Abgrenzer-Felds bzw. MPDU-Delimiter-Feld (MPDU = media access control protocol data unit) (810a) aufweist, wobei das MPDU-Delimiter-Feld (810) einen Wert speichert, der eine Zeitverzögerung anzeigt, die nach einem Empfang des wenigstens einen der zwei oder mehr A-MPDU-Subrahmen und bevor einer Bestätigung des wenigstens einen der zwei oder A-MPDU-Subrahmen gesendet wird verstreichen soll, wobei die Zeitverzögerung, die durch das MPDU-Delimiter-Feld (810a) des wenigstens einen der zwei oder mehr A-MPDU-Subrahmen angezeigt wird, auf einem Back-Off-Wert basiert, der auch in dem MPDU-Delimiter-Feld (810a) angezeigt wird, wobei der Back-Off-Wert, der in dem MPDU-Delimiter-Feld (810a) angezeigt wird, auf wenigstens einem von einer SIFS-Zeit oder einem konstanten Wert basiert.

5. Verfahren nach Anspruch 1, das weiter Empfangen der Bestätigung des Empfangs des wenigstens einen von den zwei oder mehr A-MPDU-Subrahmen nach einer Verzögerung, die größer oder gleich einer SIFS-Zeit nach einer Sendung bzw. Übertragung des A-MPDU-Rahmens (900d) ist, aufweist.

6. Verfahren nach Anspruch 1, das weiter Folgendes aufweist:
Einstellen bzw. Festlegen des Wertes des Rahmenende-Feldes (812j, 812k, 812l) in dem wenigstens einen der zwei oder mehr A-MPDU-Subrahmen um anzuzeigen, dass der Typ der Anfrage hinsichtlich einer Bestätigung eines Empfangs des wenigstens einen der zwei oder mehr A-MPDU-Subrahmen ein Bestätigungsrahmen ist.

7. Verfahren nach Anspruch 1, das weiter Folgendes aufweist:
Einstellen bzw. Festlegen des Wertes des Rahmenende-Feldes (812j, 812k, 812l) in dem wenigstens einen der zwei oder mehr A-MPDU-Subrahmen um anzuzeigen, dass der Typ der Anfrage hinsichtlich einer Bestätigung eines Empfangs für den wenigstens einen der zwei oder mehr A-MPDU-Subrahmen ein Blockbestätigungsrahmen ist.

8. Eine Vorrichtung, die Folgendes aufweist:

Mittel (1155) zum Generieren eines A-MPDU-Rahmens (A-MPDU = aggregated media access control protocol data unit unit bzw. aggregierte Medienzugriffssteuerungsprotokolldateneinheit) (900d), der zwei oder mehr A-MPDU-Subrahmen (905j, 905k, 905l) aufweist, wobei jeder A-MPDU-Subrahmen eine Empfängeradresse aufweist und wobei weiter der A-MPDU-Rahmen (900d) wenigstens eine Anzeige für eine oder mehrere Bestätigungsregeln aufweist, die mit der Empfängeradresse jedes A-MPDU-Subrahmens assoziiert sind, wobei die Mittel (115) zum Generieren des A-MPDU-Rahmens (900d) konfiguriert sind zum Generieren einer Anfrage hinsichtlich einer Bestätigung eines Empfangs in einem End-of-Frame- bzw. Rahmenende-Feld (812j, 812k, 812l) in wenigstens einem der zwei oder mehr A-MPDU-Subrahmen, wobei ein Wert in dem Rahmenende-Feld (812j, 812k, 812l) einen Typ der Anfrage für eine Bestätigung eines Empfangs bestimmt; und
Mittel (1160) zum Senden des A-MPDU-Rahmens (900d).

9. Ein Verfahren zur Drahtloskommunikation, das Folgendes aufweist:

Empfangen (1205), durch eine Vorrichtung, eines A-MPDU-Rahmens (A-MPDU = aggregated media access control protocol data unit bzw. aggregierte Medienzugriffssteuerungsprotokolldateneinheit) (900d);
Decodieren (1210), durch die Vorrichtung, von zwei oder mehr A-MPDU-Subrahmen (905j, 905k, 905l) des empfangenen A-MPDU-Rahmens (900d);
Decodieren, durch die Vorrichtung, einer Empfängeradresse entsprechend jedem der zwei oder mehr A-MPDU-Subrahmen; und
Bestimmen, dass wenigstens einer der zwei oder mehr A-MPDU-Subrahmen des empfangenen A-MPDU-Rahmens (900d) an die Vorrichtung adressiert ist basierend auf der decodierten Empfängeradresse für jeden der zwei oder mehr A-MPDU-Subrahmen; und
Decodieren einer Anfrage hinsichtlich einer Bestätigung eines Empfangs in einem End-of-Frame- bzw. Rahmenende-Feld (812j, 812k, 812l) in dem wenigstens einen der zwei oder mehr A-MPDU-Subrahmen, wobei ein Wert in dem Rahmenende-Feld (812j, 812k, 812l) einen Typ der Anfrage hinsichtlich einer Bestätigung eines Empfangs bestimmt.

10. Verfahren nach Anspruch 9, das weiter Folgendes aufweist:

Generieren eines Bestätigungsrahmens, der einen Empfang des wenigstens einen der zwei oder mehr A-MPDU-Subrahmen bestätigt, wenn der decodierte Wert in dem Rahmenende-Feld (812j, 812k, 812l) Eins ist; und

27

Ausgeben des Bestätigungsrahmens zur Sendung bzw. Übertragung.

**11.** Verfahren nach Anspruch 9, das weiter Folgendes aufweist:

Generieren eines Blockbestätigungsrahmens, der einen Empfang des wenigstens einen der zwei oder mehr A-MPDU-Subrahmen bestätigt, wenn der decodierte Wert in dem Rahmenende-Feld (812j, 812k, 8121) Null ist; und
Ausgeben des Blockbestätigungsrahmens zur Sendung bzw. Übertragung.

**12.** Verfahren nach Anspruch 11, das weiter Folgendes aufweist:

Decodieren eines Medienzugriffssteuerungsprotokolldateneinheit-Abgrenzer-Feldes bzw. MPDU-Delimiter-Feldes (MPDU = media access control protocol data unit) (810a) in dem wenigstens einen der zwei oder mehr A-MPDU-Subrahmen;
Bestimmen einer Zeitverzögerung, aus einem Wert, der in dem MPDU-Delimiter-Feld gespeichert ist, die nach einem Empfang des A-MPDU-Rahmens und vor Ausgeben des Bestätigungsrahmens zur Sendung verstreichen soll; und
Ausgeben des Bestätigungsrahmens zur Sendung, nachdem die Zeitverzögerung verstrichen ist basierend auf der einen oder den mehreren Bestätigungsregeln entsprechend jedem der zwei oder mehr A-MPDU-Subrahmen.

**13.** Verfahren nach Anspruch 12, wobei der Wert, der in dem MPDU-Delimiter-Feld (810a) gespeichert ist, ein Back-Off-Wert ist, wobei der Back-Off-Wert, der in dem MPDU-Delimiter-Feld (810a) gespeichert ist, auf wenigstens einem von einer Zeit eines kurzen Abstands zwischen Rahmen bzw. einer SIFS-Zeit (SIFS = short inter-frame space) oder einem konstanten Wert basiert.

**14.** Eine Vorrichtung für Drahtloskommunikation, die Folgendes aufweist:

Mittel (1255) zum Empfangen eines A-MPDU-Rahmens (A-MPDU = aggregated media access control protocol data unit bzw. aggregierte Medienzugriffssteuerungsprotokolldateneinheit) (900d);
Mittel (1260) zum Decodieren von zwei oder mehr A-MPDU-Subrahmen (905j, 905k, 905l) basierend auf dem empfangenen A-MPDU-Rahmen (900d);
Mittel zum Decodieren einer Empfängeradresse entsprechend jedem der zwei oder mehr A-MPDU-Subrahmen;
Mittel zum Bestimmen, dass wenigstens einer der zwei oder mehr A-MPDU-Subrahmen von dem empfangenen A-MPDU-Rahmen (900d) an die Vorrichtung adressiert ist basierend auf der decodierten Empfängeradresse für jeden der zwei oder mehr A-MPDU-Subrahmen; und
Mittel zum Decodieren einer Anfrage hinsichtlich einer Bestätigung eines Empfangs in einem End-of-Frame- bzw. Rahmenende-Feld (812j, 812k, 8121) in dem wenigstens einen der zwei oder mehr A-MPDU-Subrahmen, wobei ein Wert in dem Rahmenende-Feld (812j, 812k, 8121) einen Typ der Anfrage hinsichtlich einer Bestätigung eines Empfangs bestimmt.

**15.** Ein computerlesbares Medium, das Instruktionen aufweist, die, wenn sie durch einen Prozessor ausgeführt werden, den Prozessor veranlassen zum Durchführen des Verfahrens nach einem der Ansprüche 1 bis 7 oder 9 bis 13.

**Revendications**

**1.** Procédé de communication sans fil, comprenant les étapes suivantes :

la génération (1105), par un appareil, d'une trame d'unité de données de protocole de contrôle d'accès de média agrégée, A-MPDU, (900d) comprenant deux sous-trames A-MPDU ou plus (905j, 905k, 905l),
dans lequel chaque sous-trame A-MPDU comprend une adresse de récepteur et, en outre,
dans lequel la trame A-MPDU comprend au moins une indication pour une ou plusieurs politiques d'accusé de réception associées à l'adresse de récepteur de chaque sous-trame A-MPDU,
dans lequel la génération de la trame A-MPDU comprend :

la génération d'une requête d'accusé de réception dans une extrémité du champ de trame (812j, 812k, 812l) dans au moins une desdites deux sous-trames A-MPDU ou plus,

dans lequel une valeur dans l'extrémité du champ de trame (812j, 812k, 812l) détermine un type de requête d'accusé de réception ; et

la fourniture (1110) de la trame A-MPDU (900d) pour émission.

2. Procédé selon la revendication 1, dans lequel au moins une parmi lesdites une ou plusieurs politiques d'accusé de réception indique qu'une trame de réponse de commande doit être émise après réception de la trame A-MPDU (900d) comprenant lesdites deux sous-trames A-MPDU ou plus.

3. Procédé selon la revendication 2, dans lequel ladite au moins une parmi lesdites une ou plusieurs politiques d'accusé de réception indique en outre que la trame de réponse de commande doit être émise un temps inter-trame court après la réception de la trame A-MPDU (900d) comprenant les deux sous-trames A-MPDU ou plus, et/ou dans lequel ladite au moins une parmi lesdites une ou plusieurs politiques d'accusé de réception indique en outre que la trame de réponse de commande doit être émise si ladite au moins une parmi lesdites une ou plusieurs politiques d'accusé de réception est fixée à une valeur particulière.

4. Procédé selon la revendication 1, dans lequel au moins une parmi lesdites deux sous-trames A-MPDU ou plus comprend en outre un champ délimiteur d'unité de données de protocole de contrôle d'accès au support, MPDU, (810a), le champ délimiteur de MPDU (810) stockant une valeur qui indique un retard temporel qui doit s'écouler après la réception de ladite au moins une parmi lesdites deux sous-trames A-MPDU ou plus et avant qu'un accusé de réception de ladite au moins une parmi lesdites deux sous-trames A-MPDU ou plus soit émis, dans lequel le retard temporel indiqué par le champ délimiteur de MPDU (810a) de ladite au moins une parmi lesdites deux sous-trames A-MPDU ou plus est basé sur une valeur d'arrêt également indiquée dans le champ délimiteur de MPDU (810a), dans lequel la valeur d'arrêt indiquée dans le champ délimiteur de MPDU (810a) est basée sur au moins un parmi un temps inter-trame court ou une valeur constante.

5. Procédé selon la revendication 1, comprenant en outre la réception de l'accusé de réception de ladite au moins une parmi lesdites deux sous-trames A-MPDU ou plus après un retard supérieur ou égal à un temps inter-trame court après l'émission de la trame A-MPDU (900d).

6. Procédé selon la revendication 1, comprenant en outre :
l'établissement de la valeur de l'extrémité du champ de trame (812j, 812k, 812l) dans ladite au moins une parmi lesdites deux sous-trames A-MPDU ou plus pour indiquer que le type de la requête d'accusé de réception pour ladite au moins une parmi lesdites deux sous-trames A-MPDU ou plus est une trame d'accusé de réception.

7. Procédé selon la revendication 1, comprenant en outre :
l'établissement de la valeur de l'extrémité du champ de trame (812j, 812k, 812l) dans ladite au moins une parmi lesdites deux sous-trames A-MPDU ou plus pour indiquer que le type de la requête d'accusé de réception pour ladite au moins une parmi lesdites deux sous-trames A-MPDU ou plus est une trame d'accusé de réception de bloc.

8. Appareil comprenant :

des moyens (1155) pour générer une trame de données de protocole de contrôle d'accès de média agrégée, A-MPDU, (900d) comprenant deux sous-trames A-MPDU ou plus (905j, 905k, 905l), dans lequel chaque sous-trame A-MPDU comprend une adresse de récepteur, et dans lequel, en outre, la trame A-MPDU (900d) comprend au moins une indication pour une ou plusieurs politiques d'accusé de réception associées à l'adresse de récepteur de chaque sous-trame A-MPDU, dans lequel les moyens (1155) pour générer la trame A-MPDU (900d) sont configurés pour générer une requête d'accusé de réception dans une extrémité du champ de trame (812j, 812k, 812l) dans au moins une desdites deux sous-trames A-MPDU ou plus, dans lequel une valeur dans l'extrémité du champ de trame (812j, 812k, 812l) détermine un type de requête d'accusé de réception ; et
des moyens pour émettre (1160) la trame A-MPDU (900d).

9. Procédé de communication sans fil comprenant les étapes suivantes :

la réception (1205), par un appareil, d'une trame d'unité de données de protocole de contrôle d'accès de média agrégée, A-MPDU, (900d) ;
le décodage (1210), par l'appareil, de deux sous-trames A-MPDU ou plus (905j, 905k, 905l) de la trame A-MPDU reçue (900d) ;
le décodage, par l'appareil, d'une adresse de récepteur correspondant à chacune desdites deux sous-trames A-MPDU ou plus ; et

la détermination qu'au moins une parmi lesdites deux sous-trames A-MPDU ou plus de la trame A-MPDU reçue (900d) est adressée à l'appareil sur la base de l'adresse de récepteur décodée pour chacune desdites deux sous-trames A-MPDU ou plus ; et

le décodage d'une requête d'accusé de réception dans une extrémité d'un champ de trame (812j, 812k, 812l) dans au moins une parmi lesdites deux sous-trames A-MPDU ou plus, dans lequel une valeur dans l'extrémité d'un champ de trame (812j, 812k, 812l) détermine un type de la requête pour un accusé de réception.

10. Procédé selon la revendication 9, comprenant en outre les étapes suivantes :

la génération d'une trame d'accusé de réception accusant réception de ladite au moins une parmi lesdites deux sous-trames A-MPDU ou plus si la valeur décodée dans l'extrémité du champ de trame (812j, 812k, 812l) est égale à un ; et

la fourniture pour émission de la trame d'accusé de réception.

11. Procédé selon la revendication 9, comprenant en outre les étapes suivantes :

la génération d'une trame d'accusé de réception de bloc accusant réception de ladite au moins une parmi lesdites deux sous-trames A-MPDU ou plus si la valeur décodée dans l'extrémité du champ de trame (812j, 812k, 812l) est égale à zéro ; et

la fourniture pour émission de la trame d'accusé de réception de bloc.

12. Procédé selon la revendication 11, comprenant en outre les étapes suivantes :

le décodage d'un champ délimiteur d'unité de données de protocole de contrôle d'accès au média, MPDU, (810a) dans ladite au moins une parmi lesdites deux sous-trames A-MPDU ou plus ;

la détermination d'un retard temporel, à partir d'une valeur stockée dans le champ délimiteur de MPDU, qui doit s'écouler après la réception de la trame A-MPDU et avant la fourniture pour émission de la trame d'accusé de réception ; et

la fourniture pour émission de la trame d'accusé de réception après que le retard temporel se soit écoulé sur la base desdites une ou plusieurs politiques d'accusé de réception correspondant à chacune desdites deux sous-trames A-MPDU ou plus.

13. Procédé selon la revendication 12, dans lequel la valeur stockée dans le champ délimiteur de MPDU (810a) est une valeur d'arrêt, dans lequel la valeur d'arrêt stockée dans le champ délimiteur de MPDU (810a) est basée sur au moins un parmi un temps inter-trame court ou une valeur constante.

14. Appareil de communication sans fil comprenant :

des moyens (1255) pour recevoir une trame d'unité de données de protocole de contrôle d'accès de média agrégée, A-MPDU, (900d) ;

des moyens (1260) pour décoder deux sous-trames A-MPDU ou plus (905j, 905k, 905l) sur la base de la trame A-MPDU reçue (900d) ;

des moyens pour décoder une adresse de récepteur correspondant à chacune desdites deux sous-trames A-MPDU ou plus ;

des moyens pour déterminer qu'au moins une parmi lesdites deux sous-trames A-MPDU ou plus de la trame A-MPDU reçue (900d) est adressée à l'appareil sur la base de l'adresse de récepteur décodée pour chacune desdites deux sous-trames A-MPDU ou plus ; et

des moyens pour décoder une requête d'accusé de réception dans une extrémité d'un champ de trame (812j, 812k, 812l) dans au moins une parmi lesdites deux sous-trames A-MPDU ou plus, dans lequel une valeur dans l'extrémité du champ de trame (812j, 812k, 812l) détermine un type de requête pour un accusé de réception.

15. Support lisible par ordinateur comprenant des instructions qui, quand elles sont exécutées par un processeur, forcent le processeur à mettre en oeuvre le procédé selon l'une quelconque des revendications 1 à 7 ou 9 à 13.

FIG. 1

200

202C

STA 206H

204C

STA 206G

202A

STA 206C

204A

STA 206A

STA 206B

202B

STA 206F

204B

STA 206D

STA 206E

FIG. 2A

FIG. 2B

FIG. 3

FIG. 4

SHORT
MESSAGE —510A

SHORT
MESSAGE —510B

•
•
•

SHORT
MESSAGE —510N

502

WIRELESS
MESSAGE

502

WIRELESS
MESSAGE

502

WIRELESS
MESSAGE

• • •

504

Time

**FIG. 5A**

**FIG. 5B**

MAC Header 602

| Frame Control | Duration/ ID | Address 1 | Address 2 | Address 3 | Sequence Control | Address 4 | QoS Control | HT Control | Frame Body | FCS |
|---|---|---|---|---|---|---|---|---|---|---|
| 610 | 625 | 630 | 635 | 640 | 645 | 650 | 655 | 660 | 665 | 670 |

Octets:  2  2  6  6  6  2  6  2  4  0 - *  4

**FIG. 6**

655

| Traffic Indicator | End of Service Period | ACK Policy | A-MSDU Present | "Varied" |
|---|---|---|---|---|
| 710 | 720 | 730 | 740 | 750 |
| 4 | 1 | 2 | 1 | 8 |

**FIG. 7**

EP 3 133 861 B1

FIG. 8

810b

| BO | | B3 B4 | | B15 B16 | | B23 B24 | | B31 |
|---|---|---|---|---|---|---|---|---|
| Delay Indicator | | MPDU Length | | CRC | | Delimiter Signature | | |

814b  816b  818b  820b

**FIG. 9A**

810c

| BO | B1 | | B3 B4 | | B15 B16 | | B23 B24 | | B31 |
|---|---|---|---|---|---|---|---|---|---|
| EOF | Delay Indicator | | MPDU Length | | CRC | | Delimiter Signature | | |

812c  814c  816c  818c  820c

**FIG. 9B**

EP 3 133 861 B1

905a 905b 905c 900a

| A-MPDU sub-frame(s) Addressed To STA 106a | A-MPDU sub-frame(s) Addressed To STA 106b | A-MPDU sub-frame(s) Addressed To STA 106c |
|---|---|---|

| ... | Delay indicator =1 | ... | ACK POLICY = NORMAL ACKNOWLEDGEMENT | ... |
|---|---|---|---|---|

814m 730a

| ... | Delay Indicator = 0 | ... | ACK POLICY = NORMAL ACKNOWLEDGEMENT | ... |
|---|---|---|---|---|

814n 730b

| ... | Delay Indicator = 2 | ... | ACK POLICY = NORMAL ACKNOWLEDGEMENT | ... |
|---|---|---|---|---|

814o 730c

**FIG. 9C**

FIG. 9D

905d

905e

905f

900b

| A-MPDU sub-frame(s) Addressed To STA 106a | A-MPDU sub-frame(s) Addressed To STA 106b | A-MPDU sub-frame(s) Addressed To STA 106c |
|---|---|---|

| ... | Delay Indicator = 0 | ... | ACK POLICY = NORMAL ACKNOWLEDGEMENT | ... |
|---|---|---|---|---|

814d

730d

| ... | Delay indicator = 0 | ... | ACK POLICY = NO ACKNOWLEDGEMENT | ... |
|---|---|---|---|---|

814e

730e

| ... | Delay indicator = 0 | ... | ACK POLICY = NO ACKNOWLEDGEMENT | ... |
|---|---|---|---|---|

814f

730f

**FIG. 9E**

AP 104

A-MPDU — 900b

SIFS

STA 106a

ACK — 970

STA 106b

SIFS

STA 106c

FIG. 9F

905g     905h     905i     900c

| A-MPDU sub-frame(s) Addressed To STA 106a | A-MPDU sub-frame(s) Addressed To STA 106b | A-MPDU sub-frame(s) Addressed To STA 106c |
|---|---|---|

| ... | Delay indicator = 0 | ... | ACK POLICY = BLOCK ACKNOWLEDGEMENT | ... |
|---|---|---|---|---|

814g     730g

| ... | Delay indicator = 0 | ... | ACK POLICY =BLOCK ACKNOWLEDGEMENT | ... |
|---|---|---|---|---|

814h     730h

| ... | Delay indicator = 0 | ... | ACK POLICY = NORMAL ACKNOWLEDGEMENT | ... |
|---|---|---|---|---|

814i     730i

**FIG. 10A**

FIG. 10B

905j       905k       905l       900d

| A-MPDU sub-frame(s) Addressed To STA 106a | A-MPDU sub-frame(s) Addressed To STA 106b | A-MPDU sub-frame(s) Addressed To STA 106c |
|---|---|---|

| ... | EOF = 1 | ... | Delay Indicator = 1 | MPDU Length > 0 | ACK POLICY =NORMAL ACKNOWLEDGEMENT | ... |
|---|---|---|---|---|---|---|

812j    814j    816j    730j

| ... | EOF = 0 | ... | Delay Indicator = 0 | MPDU Length > 0 | ACK POLICY =NORMAL ACKNOWLEDGEMENT | ... |
|---|---|---|---|---|---|---|

812l    814l    816l    730l

| ... | EOF = 1 | ... | Delay Indicator = 2 | MPDU Length > 0 | ACK POLICY =NORMAL ACKNOWLEDGEMENT | ... |
|---|---|---|---|---|---|---|

812k    814k    816k    730k

**FIG. 10C**

EP 3 133 861 B1

FIG. 10D

EP 3 133 861 B1

1100

1105

GENERATING, BY A WIRELESS DEVICE, AN AGGREGATED MEDIA ACCESS CONTROL PROTOCOL DATA UNIT (A-MPDU) FRAME COMPRISING TWO OR MORE A-MPDU SUB-FRAMES, WHEREIN EACH A-MPDU SUB-FRAME COMPRISES A RECEIVER ADDRESS AND FURTHER WHEREIN THE A-MPDU FRAME COMPRISES AT LEAST ONE INDICATION FOR ONE OR MORE ACKNOWLEDGEMENT POLICIES ASSOCIATED WITH THE RECEIVER ADDRESS OF EACH A-MPDU SUB-FRAME

1110

OUTPUTING THE A-MPDU FRAME FOR TRANSMISSION

**FIG. 11A**

1150

A-MPDU FRAME
GENERATING CIRCUIT
**1155**

A-MPDU
TRANSMITTING
CIRCUIT
**1160**

**FIG. 11B**

1205

RECEIVING, BY A WIRELESS DEVICE, AN AGGREGATED
MEDIA ACCESS CONTROL PROTOCOL DATA UNIT (A-MPDU)
FRAME COMPRISING TWO OR MORE A-MPDU SUB-FRAMES,
EACH A-MPDU SUB-FRAME COMPRISING A RECEIVER
ADDRESS, THE A-MPDU FRAME SIGNALING ONE OR MORE
ACKNOWLEDGEMENT POLICIES ASSOCIATED WITH THE
RECEIVER ADDRESS OF EACH A-MPDU SUB-FRAME

1210

DECODING, BY THE WIRELESS DEVICE, THE
A-MPDU FRAME

FIG. 12A

1250

A-MPDU FRAME
RECEIVING CIRCUIT
**1255**

A-MPDU FRAME
DECODING CIRCUIT
**1260**

FIG. 12B

1300

1305

RECEIVING, BY A WIRELESS DEVICE, AN AGGREGATED MEDIA ACCESS CONTROL PROTOCOL DATA UNIT (A-MPDU) FRAME

1310

DECODING, BY THE WIRELESS DEVICE, TWO OR MORE A-MPDU SUB-FRAMES OF THE RECEIVED A-MPDU FRAME

1315

DECODING, BY THE WIRELESS DEVICE, A RECEIVER ADDRESS CORRESPONDING TO EACH OF THE TWO OR MORE A-MPDU SUB-FRAMES

**FIG. 13A**

1350

A-MPDU FRAME RECEIVING CIRCUIT **1355**

RECEIVER ADDRESS DECODING CIRCUIT **1365**

A-MPDU SUB-FRAME DECODING CIRCUIT **1360**

**FIG. 13B**

**REFERENCES CITED IN THE DESCRIPTION**

**Patent documents cited in the description**

- WO 2010099496 A1
- WO 2012030541 A1
- US 2013089047 A1